# EUROPEAN PATENT SPECIFICATION

(11) **EP 1 156 462 B1**
(45) Date of publication and mention of the grant of the patent: **09.11.2005**
(21) Application number: 01111292.7
(22) Date of filing: 16.05.2001
(51) Int. Cl.: G08G 1/127, G08G 1/123

(54) **Transportation service system**
Transportdienstsystem
Système de services de transport

(30) Priority: 19.05.2000 JP 2000152780
(43) Date of publication of application: 21.11.2001
(73) Proprietor: NEC CORPORATION, Tokyo (JP)
(72) Inventor: Ebata, Shinji, Minato-ku, Tokyo (JP)
(74) Representative: Vossius & Partner

(56) References cited:
- EP-A- 0 032 607
- EP-A- 1 076 326
- DE-A- 19 646 954
- FR-A- 2 740 249
- GB-A- 2 261 977

## Description

The present invention relates to a transportation service system and a method of providing a transportation service, which has a function to select an optimal route and to calculate a charge for the route associated with the transportation service provided by a taxi. Particularly, the present invention relates to a system and method for providing a transportation service, in which the function is disposed of on a center equipment that administers taxis in a centralized fashion.

### Description of the Prior Art

Global Positioning System (GPS) for determining a present position or location of a moving object is well known as a system that has a remarkable high-positioning precision compared with ordinary long range aid to navigation (LORAN) and OMEGA. The GPS employs orbiting satellites (hereinafter referred to as GPS satellites) at predetermined points, therefore it can be used anywhere on the earth irrespective of locations on the land or at sea. Since the GPS satellites are arranged in a three-dimensional space centered on the earth, location of a moving object can be determined with three-dimensional coordinates thereof by receiving radio waves transmitted from four GPS satellites. The waves are hereinafter referred to as GPS radio waves.

The GPS satellites transmit signals having the same frequency, however different pseudo noise (PN) sequences are assigned to each of GPS satellites. Signals transmitted from each GPS satellite include its time and its own position. The GPS terminal determines its own position according to a time difference between time information transmitted from the GPS satellite and a time local to the GPS terminal, and to satellite position information.

The GPS was originally designed with a positioning error of about 100 meters. However, it has been realized through the actual operation that the GPS is capable of functioning with an error smaller than the originally designed value. This is problematic in a strategic issue, therefore an intentional error was once added to a measured result. Specifically, the GPS was controlled not to provide an accuracy of about 100 meters.
- However, the U.S. government has recently announced to increase the GPS accuracy to about ten times higher that of the existing GPS. For each equipment manufacturer, this eliminates a processing by software for correcting positions and distances to improve accuracy. Accordingly, it is expected that the announcement spurs decrease in price of GPS terminals and the terminals will become more widely used.

The GPS has been introduced to various fields for civilian and private use. Particularly, a car navigation system for determining position of a car using the GPS has been increasingly and widely spread these years. The car navigation system requires each car to be equipped with a GPS terminal so that the terminal displays on a screen a present location of the car by referring to map information stored, for example, in a compact disk (CD) read-only memory (ROM) which is called a map matching technique.

A technique of positioning cars using the car navigation system has been conventionally employed in a transportation industry, say a taxi company. Japanese Patent Laid-Open Publication No. 10-141972 describes one of applications using the positioning technique.

In the prior art technique, a GPS terminal installed in a taxi finds an optimal route, according to information on a present location of the taxi and information on destination inputted from an input device of the GPS terminal. In addition, according to the optimal route and traffic information stored in a storage device, the GPS terminal calculates a charge for a route from the present location to the destination, and an expected arrival time, then the terminal displays the charge and arrival time on a screen.

However, the conventional GPS terminal is expensive because of the built-in software for finding an optimal route from the present location to the destination, and for calculating a charge for the optimal route and the expected arrival time. Accordingly, if each taxi has such GPS terminal in it, there is a problem that it costs a great deal for a taxi company.

Further, DE 196 46 954 A1 discloses a transportation service system according to the preamble of claim 1 and a corresponding method.

In view of the above-mentioned problem, it is an object of the present invention to provide a transportation service system and a method thereof in which the function to find an optimal route from the present location to the destination is disposed of on a center side which administers taxis in a centralized fashion, so that a taxi company can reduce the cost, and a business administration regarding taxis is simplified.

Furthermore, another object of the present invention is to provide a transportation service system and a method thereof in which a charge for the service and the like can be presented to a customer before starting a transportation service which is provided to a customer. The customer can therefore ask for the transportation service at ease. If the taxi company receives from the customer the charge presented as a charge for that service before the transportation service is provided, it is possible for the company to avoid a troublesome business such as a free ride.

Still another object of the present invention is to provide a transportation service system and a method thereof in which the center side finds a plurality of appropriate routes between the present location and the destination in accordance with different criteria, and the customer can select an optimal route suitable for her or his requirement.

Another object of the present invention is to provide a transportation service system and a method thereof in which, even in a case where the customer changes the destination while the service is being provided, the center side finds an optimal route and calculates a charge for the new destination. Therefore, according the present invention, no problem arises related to a new charge and to operation of the service provided by the taxi company.

The objects according to the present invention an achieved with the features of the claims.

The objects and features of the present invention will become more apparent from the consideration of the following detailed description taken in conjunction with the accompanying drawings in which:
Fig. 1 is a schematic diagram showing a transportation service system according to a first embodiment of the present invention;
Fig. 2 is a functional block diagram of a taxi as a constituent element of a transportation service system according to a first embodiment of the present invention;
Fig. 3 is a functional block diagram showing a center equipment as a constituent element of a transportation service system according to a first embodiment of the present invention;
Fig. 4 is a first sequence diagram illustrating by way of example the operation of a transportation service system according to a first embodiment;
Fig. 5 is a second sequence diagram showing by way of example the operation of a transportation service system according to a second embodiment of the present invention;
Fig. 6 is a third sequence diagram showing the operation of a transportation service system according to a third embodiment of the present invention;
Fig. 7 is a fourth sequence diagram showing the operation of a transportation service system according to a fourth embodiment of the present invention;
Fig. 8 is a first flowchart showing a calculation operation of an optimal route and the like by a controller of a center equipment according to a first embodiment of the present invention;
Fig. 9 is a second flowchart showing a calculation operation of an optimal route and the like by a controller of a center equipment according to a second embodiment of the present invention;
Fig. 10 is a third flowchart showing a calculation operation of an optimal route and the like by a controller of a center equipment according to a third embodiment of the present invention;
Fig. 11 is a fourth flowchart showing an example of operation to calculate an optimal route and the like by a controller of a center equipment according to a fourth embodiment of the present invention;
Fig. 12 is a fifth flowchart showing by way of example the operation to calculate a charge by a controller of a center equipment according to a third embodiment of the present invention;
Fig. 13 is a diagram for describing a charge calculation operation by a controller of a center equipment when a customer changes a destination;
Fig. 14 is a table related to administration method of business results executed by a center equipment according to the present invention;
Fig. 15 is a diagram for showing an example of service-charge information stored in a preset charge information storage section of a center equipment according to the present invention;
Fig. 16A is a diagram explaining an optimal route calculated by a system according to the present invention; and
Fig. 16B is a diagram explaining an optimal route calculated by a system according to the present invention.

To clarify functions and operations of the present invention, description will now be given of operation and constitution of a transportation service system according to the present invention.

A transportation service system according to the present invention includes at least one GPS satellite for transmitting information such as information related to time and information on a GPS satellite's position used for detecting location of a moving object (a taxi in this example), at least one taxi which is equipped with a GPS terminal for receiving information from the GPS satellite to detect a present location, and a center equipment for deriving an optimal route and calculating a charge for the optimal route depending upon information on the present location detected by the GPS terminal and destination information to be transmitted together with the present-location information. The center equipment transmits the optimal route and charge to the taxi.

Each taxi finds its own location by using the GPS terminal which detects the location according to information sent from the GPS satellite. Present-location information so obtained is transmitted from the taxi to the center equipment, together with information on the destination specified by a customer (passenger in this case). Though any known prior-art communication technique can be used to transmit the information from the taxi to the center equipment, it is possible to use, for example, a portable telephone terminal which transmits the information to the center equipment via a portable telephone communication network and the Internet.

The center equipment finds an optimal route and calculates a charge for the optimal route, and the like, according to the present-location information and destination information received via the Internet, which are sent to the taxi. For finding an optimal route, the center equipment can access information supplied from Intelligent Transportation System (ITS).

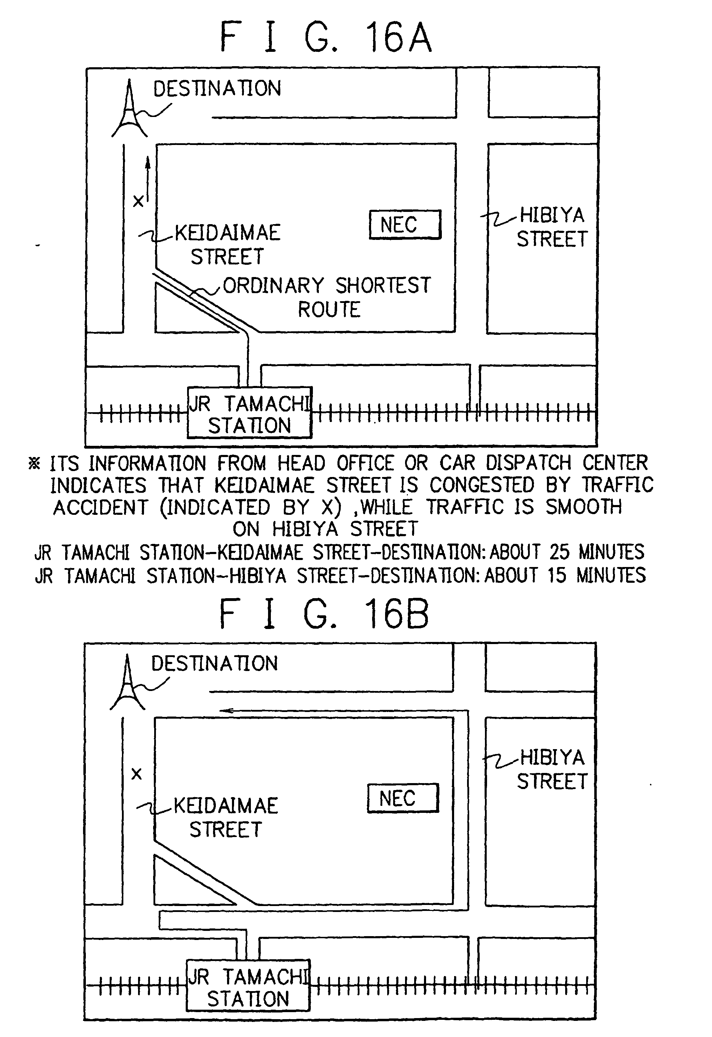

Using the ITS, the center equipment can find, for example, a detour as an optimal route by which the taxi can arrive at the destination in a shorter period of time than the original optimal route which provides the shortest route to the destination as shown in Figs. 16A and 16B, when the original route is congested. Any known prior-art communication technique can be used for transmitting the information found in the center equipment to the taxi. For example, the information can be sent to a portable telephone terminal equipped in the taxi, via a portable telephone communication network and the Internet.

When the information on the optimal route and the charge is received by the portable telephone terminal in the taxi, the information is transmitted to the GPS terminal which displays it on its screen. A taxi driver can therefore present to a passenger a scheduled route and a charge therefor by visually checking the information items displayed on the screen and by showing a passenger the displayed items.

According to the present invention, information on a route and information on a charge thus found and calculated are managed by the center equipment in each case for each taxi. The present invention therefore makes it possible to simplify management for business results of each taxi.

According to the present invention, in a case where a passenger changes the destination to a new one while a transportation service is being provided, a taxi transmits information on a present location at the time of said change and information on the new destination to the center equipment. The center equipment finds a new optimal route and calculates a charge for the new route, according to the received information, and then sends to the taxi information regarding the new optimal route and the charge for the route. Upon reception of the information by a portable telephone terminal equipped in the taxi, the received information is sent to a GPS terminal to be displayed on a screen.

Accordingly, even when a passenger changes the destination while the transportation service is being provided, the center equipment can find a new optimal route and calculate a charge for the route corresponding to the destination change. The new optimal route can therefore be shown to the taxi driver and passenger. The center equipment updates optimal routes and a charge for these routes, thus capable of managing business results appropriately for each taxi.

According to the present invention, when a passenger changes the destination while the service is provided, the center equipment calculates a charge for the new route and a difference in charge between the new charge and a charge originally calculated. The center equipment transmits to the taxi information regarding the new charge, together with information on difference in charge. In such a case, a passenger can ask for the service at ease even when he or she changes the destination, because he or she is notified of a payable charge in advance.

Additionally, according to the present invention, the center equipment finds plural optimal routes between the present location and the destination based on different criteria, depending upon the present-location information and the destination information sent from each taxi. The center equipment also calculates a charge for each optimal route. The optimal route and charge therefor are sent to the taxi. Upon reception of the information by a portable telephone terminal equipped in the taxi, the information received is sent from the portable telephone terminal to a GPS terminal to be displayed on a screen. It is noted that the information items mentioned above include a period of time required for transportation, a charge therefor, and a related distance.

According to the present invention, a passenger can select his or her required route from among a plurality of routes, which makes the service correspond to the need of the passenger.

Description will now be given of embodiments of the present invention by referring to the accompanying drawings.

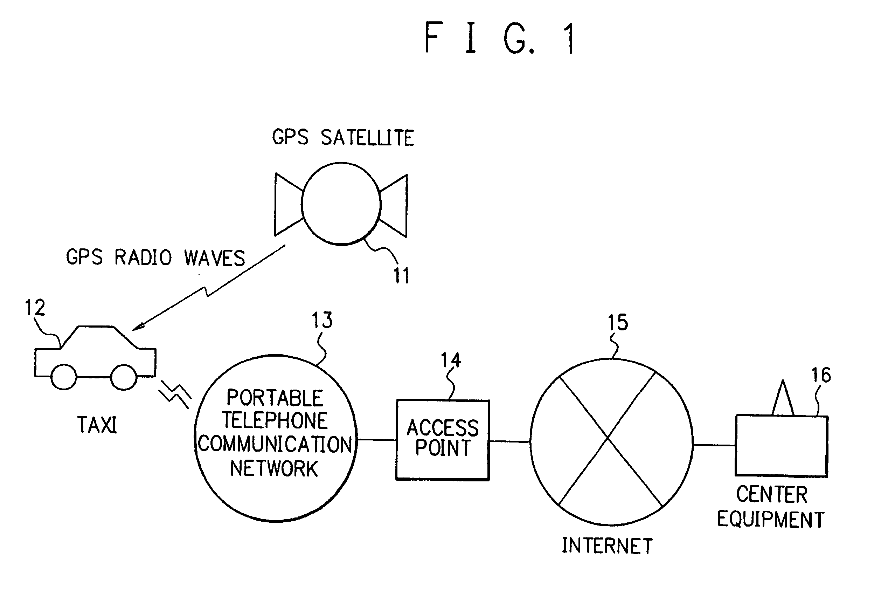

Fig. 1 schematically shows a construction of a transportation service system according to the present invention. The system as shown in Fig. 1 includes at least one GPS satellite 11 which is an intermediate orbiter orbiting the earth in about 12 hours, at least one taxi 12 traveling on the ground, and a center equipment 16 which administers the taxi 12 and communicates necessary information with the taxi 12.

The taxi 12 has a GPS terminal on board (not shown) which receives GPS radio waves transmitted from the GPS satellite 11 and finds its own location according to information such as time information and position information related to the GPS satellite, propagated on the GPS radio waves. The taxi 12 sends information on the present location and the like found by the GPS terminal, that is, information on the present location of the taxi 12, to the center equipment 16.

In the present embodiment, each taxi (the taxi 12 in Fig. 1) uses a portable telephone terminal to send and receive the information. The portable telephone terminal is connected to the GPS terminal. Information such as the present-location information found by the GPS terminal is sent from the portable telephone terminal to the center equipment 16.

As shown in Fig. 1, information transmitted from the portable telephone terminal is sent to an access point 14 including a dedicated server device called a gateway server, via a portable telephone network 13. In the access point 14, the gateway server performs a protocol conversion, a data conversion, and the like. Information from the portable telephone terminal is then transmitted from the access point 14 to the center equipment 16 via the Internet 15.

In addition to the present-location information associated with the taxi 12 (the present-location information of the GPS terminal), information sent from the portable telephone terminal includes information on the destination specified by a passenger. When a passenger takes a seat in the taxi 12 and specifies the destination, a driver inputs the destination using an input device of the GPS terminal. The information on the destination is then sent from the portable telephone terminal.

When the center equipment 16 receives the information via the Internet, it starts finding and calculating according to the present-location information and destination information contained in the received information, an optimal route from the present location of the taxi 12 indicated by the present-location information to the destination indicated by the destination information, a service charge for the route, a distance from the present location to the destination on the route, a required traveling time, and the like.

These information items made by the center equipment 16 are transmitted in the opposite direction compared with the information reception, from the center equipment 16 to the taxi 12 via the Internet 15 and the portable telephone terminal network 13. On receipt of the information by the portable telephone terminal of the taxi 12, the terminal sends the information to the GPS terminal to display the received information items on a display device of the GPS terminal.

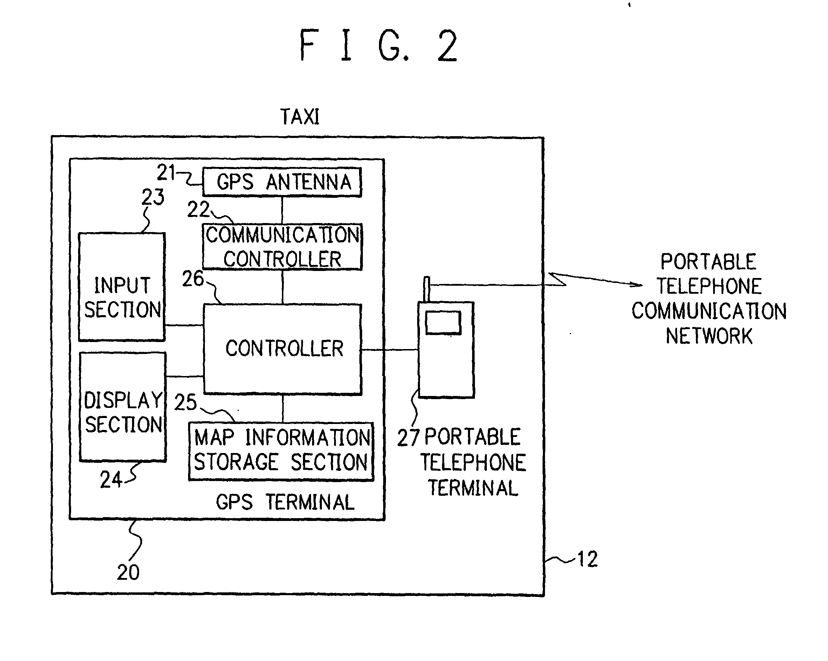

Fig. 2 shows a functional block diagram of the taxi 12 according to the transportation service system of the present invention. In Fig. 2, a GPS terminal 20 loaded on the taxi 12 includes a GPS antenna 21 to receive GPS radio waves sent from the GPS satellite 11, a communication controller 22 to control communications with the GPS satellite 11, an input section 23 for inputting the destination, a map information storage section 25 to store map information for individual areas, a display section 24 to display an image thereupon, and a controller 26 connected to the respective components of the GPS terminal 20 to control overall functions of the terminal. The GPS terminal 20 is externally connected to a portable telephone terminal 27 which is coupled with the controller 26 of the GPS terminal 20.

Description will now be given of operation of the GPS terminal 20 and the portable telephone terminal 27. The GPS terminal 20 receives by the GPS antenna 21 the GPS radio waves transmitted from the GPS satellite 11, under the control of the communication controller 22. Information carried on the GPS radio waves is fed to the controller 26 which accordingly detects the present location of the GPS terminal 20. The present-location information is sent to the portable telephone terminal 27 under the control of the controller 26. As described above, the destination information associated with a passenger which has been inputted from the input section 23 is also transmitted together with the present-location information to the portable telephone terminal 27. The terminal 27 then sends the information received from the GPS terminal 20 to the portable telephone network 13.

The information sent from the center equipment 16 toward the taxi 12 is received by the portable telephone terminal 27, via the Internet 15 and the portable telephone network 13. The information thus received is then delivered to the controller 26 of the GPS terminal 20. The controller 26 reads out map information corresponding to the received information from the map information storage section 25, and superposes an optimal route on the map read from the storage section 25 using the display section 24. The controller 26 also controls to display such information items as a charge, a required traveling time, and a distance associated with the route.

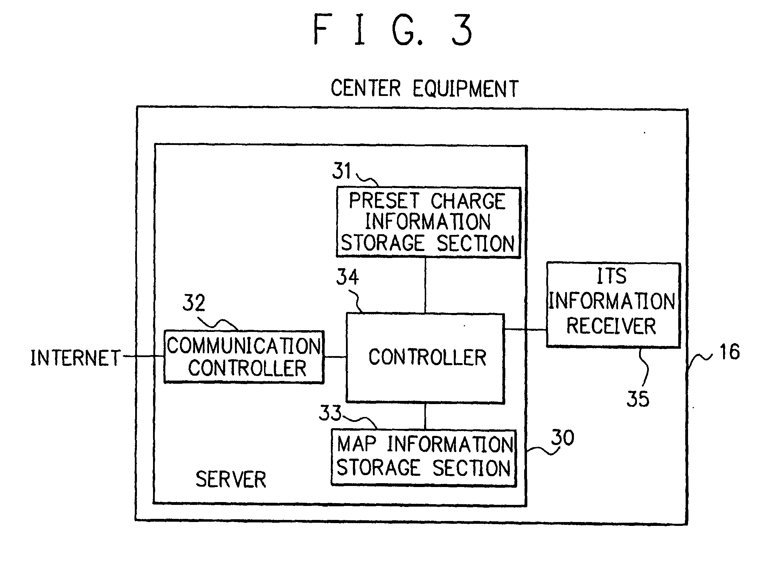

Fig. 3 is a functional block diagram of the center equipment 16 in the transportation service system according to the present invention. In Fig. 3, a server 30 as a constituent component of the center equipment 16 of the present embodiment includes a communication controller 32 to send and receive information via the Internet 15, a map information storage section 33 to store map information for individual areas, a preset charge information storage section 31 to store service-charge information set by the taxi company, and a controller 34 connected to the respective components of the server 30 to control overall functions of the server.

The server 30 is externally connected to an ITS information receiver 35 to receive ITS information. The receiver 35 is coupled to the controller 34 of the server 30 as shown in the diagram.

Description will now be given of operation of the server 30 and the ITS information receiver 35 according to the present embodiment. When the taxi 12 transmits destination information and present-location information via the portable telephone network and the Internet 15, the communication controller 32 of the center equipment 16 receives these pieces of information and delivers the information to the controller 34. The controller 34 then reads out from the map information storage 33 map information corresponding to the received information.

Based on the destination information and present-location information received from the taxi 12 and on the map information read out from the map information storage section 33, the controller 34 finds one or a plurality of optimal routes between the present location and the destination. The controller 34 also calculates a distance concerning each route thus found. The ITS information receiver 35 receives traffic information supplied sequentially from the ITS. Each time such traffic information is received, the receiver 35 sends the information to the controller 34.

The controller 34 calculates a required traveling time for each of the optimal routes, according to the latest information among the ITS information received by the ITS receiver 35. The controller 34 reads out from the preset charge information storage section 31 service-charge information associated with the taxi company so as to calculate a charge for each route, according to the service-charge information and to the distance information and required traveling time information calculated for each route.

Under the control of the controller 34, information indicating the optimal route found, a service charge therefor, a distance, and a required traveling time to which address information of the portable telephone terminal 27 is added, is sent from the communication controller 32 to the taxi 12 via the Internet 15.

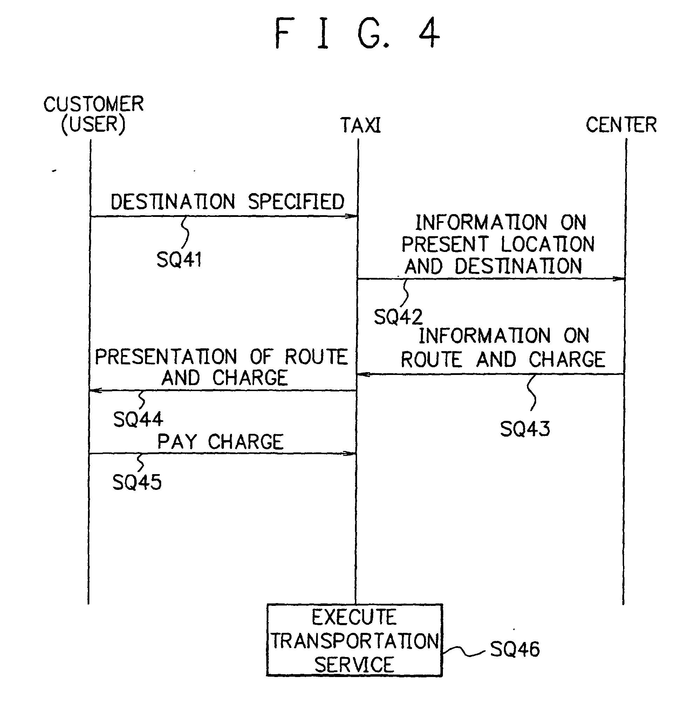

Referring now to Figs. 1 to 4, a detailed description of operation of a system according to a first embodiment of the present invention will be given. Fig. 4 is a sequence diagram illustrating the operation of the first embodiment system.

When a passenger gets in the taxi 12 and notifies a driver a desired destination, the driver inputs the destination from the input section 23 (sequence SQ 41). The inputted destination information is sent to the controller 26 which generates present-location information indicating controller's present location at that time, according the information received from the GPS satellite 11. The controller 26 then transmits the present-location information together with the destination information to the portable telephone terminal 27.

Upon reception of the present-location information and the destination information from the controller 26, the portable telephone terminal 27 sends these items of information to the center equipment 16 via the portable telephone network 13 and the Internet 15 (SQ 42). The communication controller 32 of the center equipment 16 receives that information via the Internet 15. The information received is then fed to the controller 34. The controller 34 reads from the map information storage section 33 map information corresponding to the present-location information and the destination information, obtains ITS information from the ITS information receiver 35, and reads service-charge information from the preset charge information storage section 31. The controller 34 therefore finds an optimal route, and calculates a distance, a required traveling time, and a charge associated with the route.

The controller 34 thereafter adds address information of the portable telephone terminal 27 to information which includes the optimal route found, and the calculated distance, required traveling time, and charge. The resultant information is sent from the communication controller 32 to the Internet 15 (SQ 43).

In the taxi 12, the portable telephone terminal 27 receives the information sent from the center equipment 16 and passes the information to the controller 26 of the GPS terminal 20. On receipt of the information from the telephone terminal 27, the controller 26 reads from the map information storage section 25 map information corresponding to an optimal route contained in the information. The display section 24 then displays distance information, time information, and charge information, where the optimal route is superposed on a map given by the map information.

A taxi driver explains to a passenger in advance about a transportation service to be provided, by showing the passenger a screen image displayed on the display 24 (SQ 44). The passenger pays a charge indicated by the display 24 before the transportation service is started (SQ 45). Upon completion of the payment, the service is provided by the taxi 12 (SQ 46). It should be noted that the present invention system is capable of corresponding to any conventional payment method, including payment by cash, direct debit from a designated bank account, a credit card, and the like.

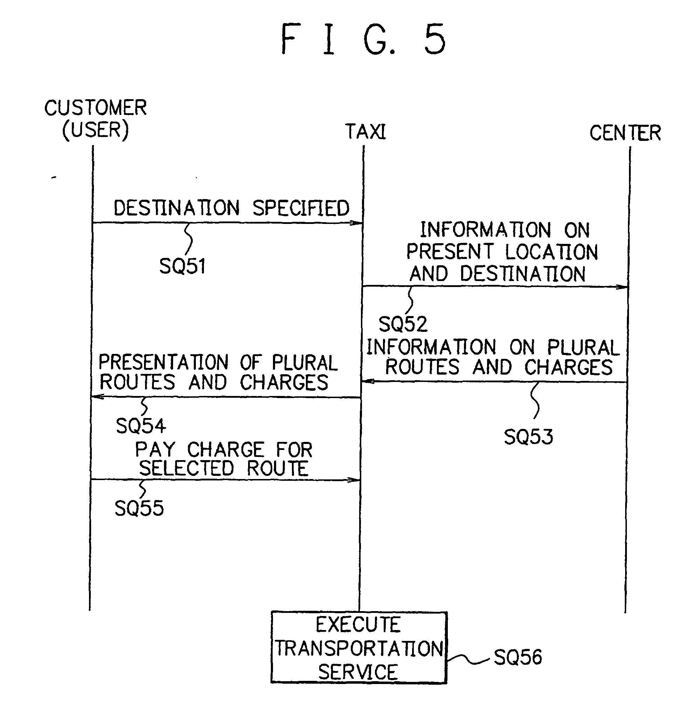

Description will now be given of operation of a system according to a second embodiment of the present invention, by referring to Figs. 1, 2, 3, and 5. Fig. 5 is a sequence diagram illustrating the operation of the second embodiment system.

Similar to the first embodiment, when a passenger gets in the taxi 12 and notifies a driver a desired destination, the driver inputs the destination from the input section 23 (sequence SQ 51 of Fig. 5). After the inputted destination information is sent to the controller 26, it generates present-location information indicating controller's present location at that time, according the information received from the GPS satellite 11. The controller 26 then transmits the present-location information together with the destination information to the portable telephone terminal 27.

On receipt of the present-location information and the destination information from the controller 26, the portable telephone terminal 27 sends these items of information to the center equipment 16 via the portable telephone network 13 and the Internet 15 (SQ 52). In the center equipment 16, the communication controller 32 receives the information via the Internet 15. The received information is then fed to the controller 34. The controller 34 reads from the map information storage section 33 map information corresponding to the present-location information and the destination information, obtains ITS information from the ITS information receiver 35, and reads service-charge information from the preset charge information storage section 31. The controller 34 therefore finds and calculates depending upon different criteria, a plurality of optimal routes, a distance, a required traveling time, and a charge associated with these routes.

The controller 34 adds address information of the portable telephone terminal 27 to information which includes the optimal route found, and the calculated distance, required traveling time, and charge. The resultant information is sent from the communication controller 32 to the Internet 15 (SQ 53).

In the taxi 12, the portable telephone terminal 27 receives the information sent from the center equipment 16 and passes that information to the controller 26 of the GPS terminal 20. On receipt of the information from the telephone terminal 27, the controller 26 reads from the map information storage section 25 map information corresponding to an optimal route contained in the information. The display section 24 then displays distance information, time information, and charge information regarding respective optimal routes. At the same time, the display section 24 superposes the optimal route on a map given by the map information.

A taxi driver explains to a passenger in advance about a transportation service to be provided, by showing the passenger a screen image displayed on the display 24 (SQ 54). Before the transportation service is started, the passenger selects a route from among the plurality of routes which is most suitable for his or her demand, and pays a charge indicated by the display 24 (SQ 55). The service is provided by the taxi 12, if the passenger pays the charge (SQ 56).

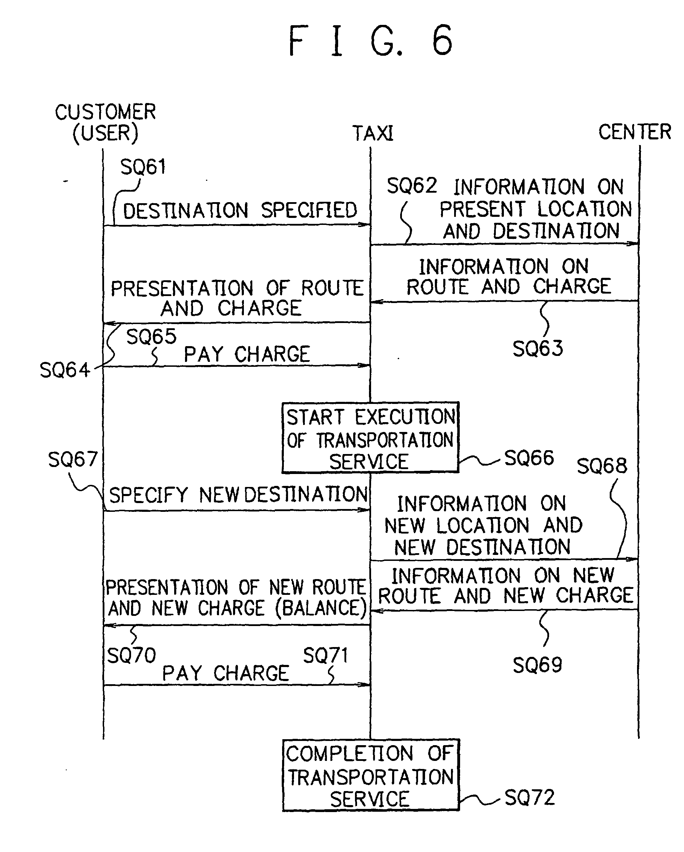

Referring now to Figs. 1 to 3, and 6 a detailed description of operation of a system according to a third embodiment of the present invention will be given. Fig. 6 is a sequence diagram illustrating the operation of the third embodiment system.

When a passenger gets in the taxi 12 and notifies a driver a desired destination, the driver inputs the destination using the input section 23 (sequence SQ 61 of Fig. 6). The destination information inputted is sent to the controller 26 which generates present-location information indicating controller's present location at that time, according the information received from the GPS satellite 11. The controller 26 then transmits the present-location information together with the destination information to the portable telephone terminal 27.

Upon reception of the present-location information and the destination information from the controller 26, the portable telephone terminal 27 sends these items of information to the center equipment 16 via the portable telephone network 13 and the Internet 15 (SQ 62). The communication controller 32 of the center equipment 16 receives that information via the Internet 15. The information received is then fed to the controller 34. The controller 34 reads from the map information storage section 33 map information corresponding to the present-location information and the destination information, obtains ITS information from the ITS information receiver 35, and reads service-charge information from the preset charge information storage section 31. The controller 34 therefore finds and calculates an optimal route, a distance, a required traveling time, and a charge associated with the route.

The controller 34 thereafter adds address information of the portable telephone terminal 27 to information which includes the optimal route found, and the calculated distance, required traveling time, and charge. The resultant information is sent from the communication controller 32 to the Internet 15 (SQ 63).

The portable telephone terminal 27 in the taxi 12 receives the information sent from the center equipment 16 and passes the information to the controller 26 of the GPS terminal 20. On receipt of the information from the telephone terminal 27, the controller 26 reads from the map information storage section 25 map information corresponding to an optimal route contained in the information. The display section 24 then displays distance information, time information, and charge information, where the optimal route is superposed on a map given by the map information.

A taxi driver explains to a passenger in advance about a transportation service to be provided, by showing the passenger a screen image displayed on the display 24 (SQ 64). The passenger pays a charge indicated by the display 24 before the transportation service is started (SQ 65). Upon completion of the payment, the service is provided by the taxi 12 (SQ 66).

When a passenger changes the destination while the transportation service is being provided, the driver inputs the new destination from the input unit 23 (SQ 67). After information regarding the new destination is fed to the controller 26, it generates information on its own present location in accordance with information received at that time via the GPS satellite 11. The resultant information, that is the present-location information is sent to the portable telephone terminal 27 together with the destination information.

Upon reception of new present-location information and new destination information from the controller 26, the portable telephone terminal 27 transmits these items of information to the center equipment 16 via the portable telephone network 13 and the Internet 15 (SQ 68). The communication controller 32 of the center equipment 16 receives that information via the Internet 15 and sends it to the controller 34.

The controller 34 reads out from the map information storage section 33 map information corresponding to the new present-location information and destination information, and at the same time the controller acquires ITS information from the ITS information receiver 35 and reads service-charge information from the preset charge information storage section 31. The controller 34 thereby finds an optimal route, and calculates a distance, a required traveling time, and a charge associated with the route.

The controller 34 adds address information of the portable telephone terminal 27 to information which includes the newly found optimal route, and the newly calculated distance, required traveling time, and charge. The resultant information is sent from the communication controller 32 to the Internet 15 (SQ 69).

The portable telephone terminal 27 in the taxi 12 receives the information sent from the center equipment 16 and passes that information to the controller 26 of the GPS terminal 20. On receipt of the information from the telephone terminal 27, the controller 26 reads from the map information storage section 25 map information corresponding to the new optimal route contained in the information. The display section 24 then displays newly obtained distance information, time information, and charge information, where the new optimal route is superposed on a map given by the map information.

A taxi driver explains to a passenger about a transportation service to be provided, by showing the passenger a screen image displayed on the display 24 (SQ 70). The passenger pays a charge indicated by the display 24 before the transportation service is started (SQ 71). Upon completion of the payment, the service is again provided by the taxi 12 (SQ 72).

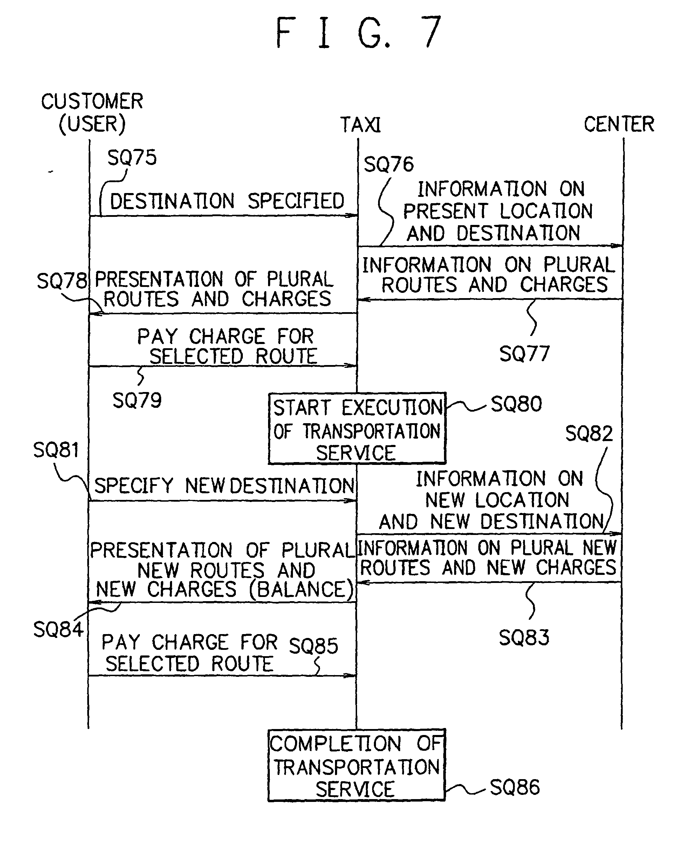

Description will now be given of operation of a system according to a fourth embodiment of the present invention, by referring to Figs. 1 to 3, and 7. Fig. 7 is a sequence diagram illustrating the operation of the fourth embodiment system.

Similar to the second embodiment, when a passenger gets in the taxi 12 and notifies a driver a desired destination, the driver inputs the destination from the input section 23 (sequence SQ 75). After the inputted destination information is sent to the controller 26, it generates present-location information indicating controller's present location at that time, according the information received from the GPS satellite 11. The controller 26 then transmits the present-location information together with the destination information to the portable telephone terminal 27.

After receiving the present-location information and the destination information from the controller 26, the portable telephone terminal 27 sends these items of information to the center equipment 16 via the portable telephone network 13 and the Internet 15 (SQ 76). In the center equipment 16, the communication controller 32 receives the information via the Internet 15. The received information is then fed to the controller 34. The controller 34 reads from the map information storage section 33 map information corresponding to the present-location information and the destination information, obtains ITS information from the ITS information receiver 35, and reads service-charge information from the preset charge information storage section 31. The controller 34 therefore finds and calculates depending upon different criteria, a plurality of optimal routes, a distance, a required traveling time, and a charge associated with these routes.

The controller 34 adds address information of the portable telephone terminal 27 to information which includes the optimal route found, and the calculated distance, required traveling time, and charge. The resultant information is sent from the communication controller 32 to the Internet 15 (SQ 77).

In the taxi 12, the portable telephone terminal 27 receives the information sent from the center equipment 16 and passes that information to the controller 26 of the GPS terminal 20. On receipt of the information from the telephone terminal 27, the controller 26 reads from the map information storage section 25 map information corresponding to an optimal route contained in the information. The display section 24 then displays distance information, time information, and charge information for every optimal route. At the same time, the display section 24 superposes the optimal route on a map given by the map information.

A taxi driver explains to a passenger in advance about a transportation service to be provided, by showing the passenger a screen image displayed on the display 24 (SQ 78). Before the transportation service is started, the passenger selects a route from among the plurality of routes which is most suitable for his or her demand, and pays a charge indicated by the display 24 (SQ 79). The taxi 12 starts providing the service, if the passenger pays the charge (SQ 80).

In a case where a passenger changes the destination while the transportation service is being provided, the driver inputs the new destination from the input unit 23 (SQ 81). After information regarding the new destination is fed to the controller 26, it generates information on its own present location in accordance with information received at that time via the GPS satellite 11. The resultant information (present-location information) is sent to the portable telephone terminal 27 together with the destination information.

Upon reception of new present-location information and new destination information from the controller 26, the portable telephone terminal 27 transmits these items of information to the center equipment 16 via the portable telephone network 13 and the Internet 15 (SQ 82). The communication controller 32 of the center equipment 16 receives that information via the Internet 15 and sends it to the controller 34.

The controller 34 reads out from the map information storage section 33 map information corresponding to the new present-location information and destination information, and at the same time the controller acquires ITS information from the ITS information receiver 35 and reads service-charge information from the preset charge information storage section 31. The controller 34 thereby finds plural optimal routes depending upon respective different criteria, and calculates a distance, a required traveling time, and a charge associated with these routes.

The controller 34 adds address information of the portable telephone terminal 27 to information which includes the newly found optimal route, and the newly calculated distance, required traveling time, and charge. The resultant information is sent from the communication controller 32 to the Internet 15 (SQ 83).

The portable telephone terminal 27 in the taxi 12 receives the information sent from the center equipment 16 and passes that information to the controller 26 of the GPS terminal 20. On receipt of the information from the telephone terminal 27, the controller 26 reads from the map information storage section 25 map information corresponding to the new optimal route contained in the information. The display section 24 then displays newly obtained distance information, time information, and charge information, where the new optimal route is superposed on a map given by the map information.

A taxi driver explains to a passenger about a transportation service to be provided, by showing the passenger a screen image displayed on the display 24 (SQ 84). The passenger pays a charge indicated by the display 24 before the transportation service is started (SQ 85). Upon completion of the payment, the service is again provided by the taxi 12 (SQ 86).

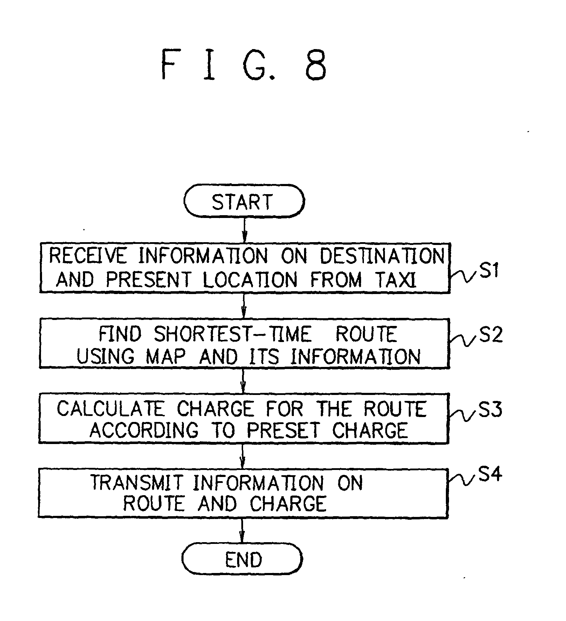

Next, description will be given in detail of operation of the controller 34 of the server 30 equipped in the center equipment 16 according to the first embodiment. Fig. 8 is a flowchart illustrating operation of the controller 34 according to the first embodiment.

In step S1 of Fig. 8, when the controller 34 receives from the communication controller 32 information (that is, present-location information and destination information) which have been sent from the taxi 12, the controller 34 reads from the map information storage section 33 map information associated with the present-location information and destination information, thus determining a plurality of routes connecting the present location and the destination.

The controller 34 acquires latest ITS information received by the ITS information receiver 35, and determines from among a plurality of routes an optimal route which is a shortest-time route requiring a shortest driving time, according to the map information and the ITS information. The controller 34 then generates distance information regarding a shortest-distance route based on the map information (step S2).

In step S3, the controller 34 reads service-charge information from the preset charge information storage section 31, and generates charge information on the shortest-distance route according to the service-charge information. In the next step, step S4, the controller 34 adds address information of the portable telephone terminal 27 to information including the shortest-time route information, the distance information, and the charge information, and transmits that information from the communication controller 32 to the Internet 15.

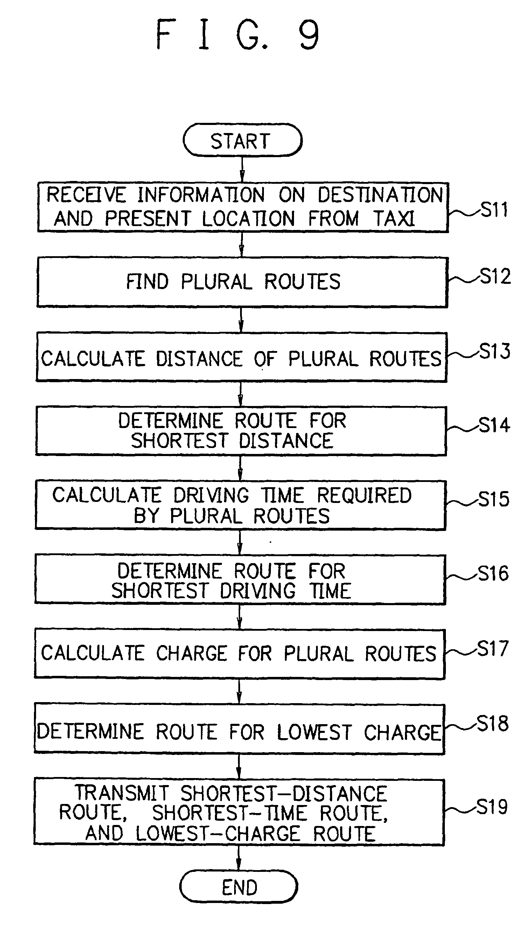

Description will now be given in detail of operation of the controller 34 of the server 30 equipped in the center equipment 16 according to the second embodiment. Fig. 9 is a flowchart illustrating operation of the controller 34 according to the second embodiment.

When the controller 34 receives from the communication controller 32 information (present-location information and destination information) which have been sent from the taxi 12, the controller 34 reads from the map information storage section 33 map information corresponding to the present-location information and destination information (step S11), thus determining a plurality of routes connecting the present location and the destination (step S12). The controller 34 calculates a distance between the present location and the destination for each of the routes, according to the map information (step S13). The controller 34 then determines one of the plural routes as an optimal route which is a shortest-distance route having the shortest distance (step S14).

The controller 34 acquires latest ITS information received by the ITS information receiver 35, and calculates a required driving time for each route according to the map information and the ITS information (step S15). The controller 34 then determines one of the routes as an optimal route which is a shortest-time route requiring the shortest required driving time (step S16).

In step S17, the controller 34 reads service-charge information from the preset charge information storage section 31, and generates charge information for each of the routes according to the service-charge information. The controller 34 determines one of the routes as an optimal route which is a lowest-charge route requiring the lowest charge (step S18).

In the next step, the controller 34 adds address information of the portable telephone terminal 27 to information including information on the shortest-distance route and its time information, information on the shortest-time route and its time information, and information on the lowest-charge route and its charge information. The controller 34 then transmits the information from the communication controller 32 to the Internet 15 (step S19).

Accordingly, a passenger visually checks plural optimal routes and associated information presented on the display 24, and selects the route which is most suitable for his or her demand. The passenger pays a charge for the selected optimal route before the transportation service is provided. Upon completion of the payment, the transportation service is provided by the taxi 12.

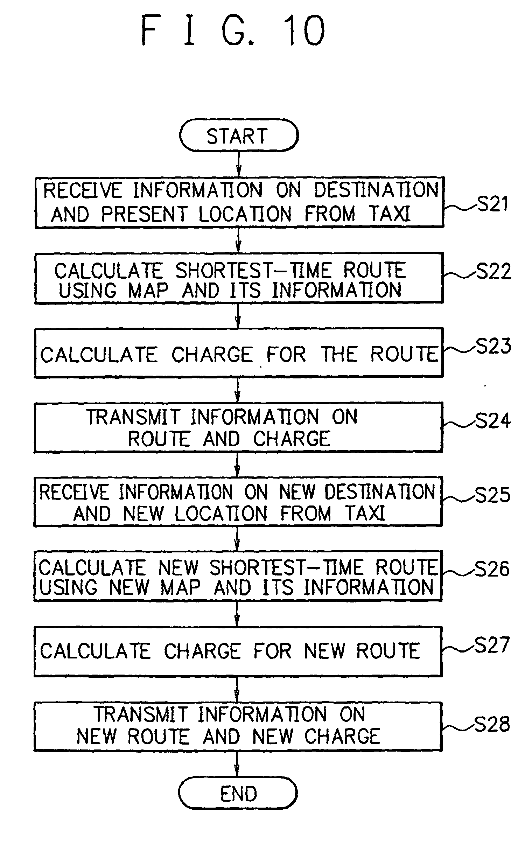

Description will be given in detail of operation of the controller 34 of the server 30 equipped in the center equipment 16 according to the third embodiment. Fig. 10 is a flowchart illustrating operation of the controller 34 according to the third embodiment.

When the controller 34 receives from the communication controller 32 information (present-location information and destination information) which have been sent from the taxi 12, the controller 34 reads from the map information storage section 33 map information associated with the present-location information and destination information (step S21), thus determining a plurality of routes connecting the present location and destination. The controller 34 also generates distance information regarding each distance between the present location and the destination, based upon the map information.

The controller 34 acquires latest ITS information received by the ITS information receiver 35, and determines from among the plurality of routes an optimal route which is a shortest-time route requiring the shortest required driving time, according to the map information and the ITS information. The controller 34 then generates distance information regarding a shortest-distance route based on the map information (step S22).

The controller 34 reads in step S23 service-charge information from the preset charge information storage section 31, and generates charge information on the shortest-distance route according to the service-charge information. In the next step, step S24, the controller 34 adds address information of the portable telephone terminal 27 to information including the shortest-time route information, the distance information, and the charge information, and transmits that information from the communication controller 32 to the Internet 15.

In a case where a passenger changes the destination while the transportation service is being provided, the driver inputs the new destination from the input unit 23. After information regarding the new destination is fed to the controller 26, it generates information on its own present location in accordance with information received at that time via the GPS satellite 11. The resultant information (present-location information) is sent to the portable telephone terminal 27 together with the destination information.

Upon reception of new present-location information and new destination information from the controller 26, the portable telephone terminal 27 transmits these items of information to the center equipment 16 via the portable telephone network 13 and the Internet 15. The communication controller 32 of the center equipment 16 receives that information via the Internet 15 and sends it to the controller 34.

When the controller 34 receives in step S25, from the communication controller 32, new information (new present-location information and new destination information) which have been sent from the taxi 12, the controller 34 reads from the map information storage section 33 map information corresponding to the present-location information and destination information, thus determining a plurality of routes connecting the present location and the destination.

The controller 34 acquires latest ITS information received by the ITS information receiver 35, and calculates a required driving time for each route according to the new map information and the new ITS information. The controller 34 then determines one of the plural routes as an optimal route which is a shortest-time route requiring the shortest required driving time (step S26).

The controller 34 reads in step S27 service-charge information from the preset charge information storage section 31, and generates charge information on the shortest-distance route according to the service-charge information. In step S28, the controller 34 adds address information of the portable telephone terminal 27 to information including the shortest-time route information, the distance information, and the charge information, and transmits that information from the communication controller 32 to the Internet 15.

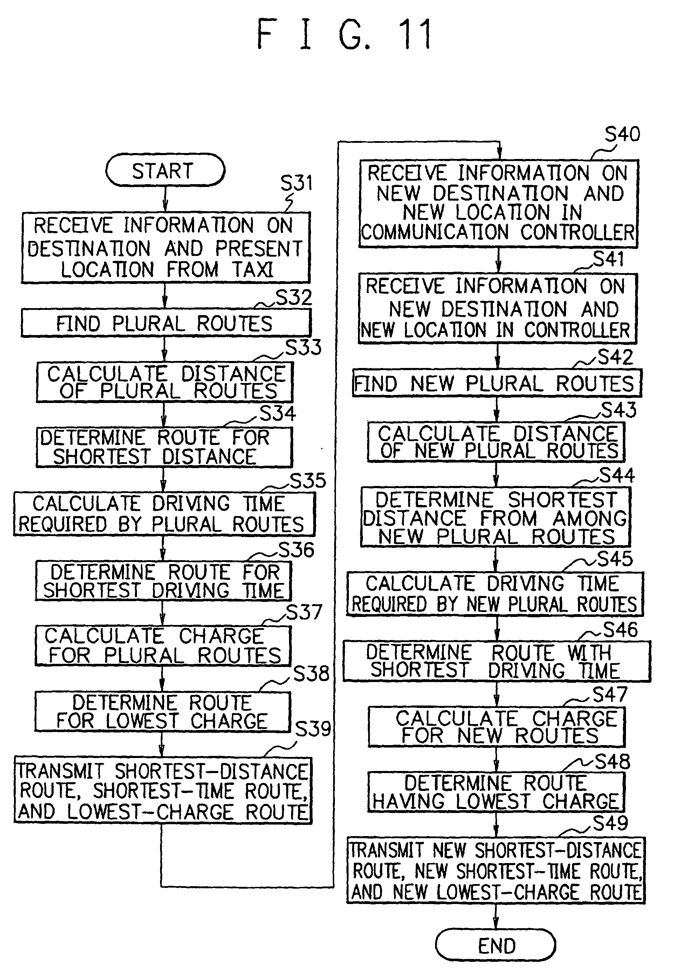

Description will now be given in detail of operation of the controller 34 of the server 30 equipped in the center equipment 16 according to the fourth embodiment. Fig. 11 is a flowchart illustrating operation of the controller 34 according to the fourth embodiment.

Similar to the operation as performed in the second embodiment system, when the controller 34 receives from the communication controller 32 information (present-location information and destination information) which have been sent from the taxi 12, the controller 34 reads from the map information storage section 33 map information corresponding to the present-location information and destination information (step S31), thus determining a plurality of routes connecting the present location and the destination (step S32). The controller 34 calculates a distance between the present location and the destination for each of the routes, according to the map information (step S33). The controller 34 then determines one of the plural routes as an optimal route which is a shortest-distance route having the shortest distance (step S34).

The controller 34 acquires latest ITS information received by the ITS information receiver 35, and calculates a required driving time for each route according to the map information and the ITS information (step S35). The controller 34 then determines one of the routes as an optimal route which is a shortest-time route requiring the shortest required driving time (step S36).

The controller 34 reads in step S37 service-charge information from the preset charge information storage section 31, and generates charge information for each of the routes according to the service-charge information. The controller 34 determines one of the routes as an optimal route which is a lowest-charge route requiring the lowest charge (step S38).

In the next step, the controller 34 adds address information of the portable telephone terminal 27 to information including information on the shortest-distance route and its time information, information on the shortest-time route and its time information, and information on the lowest-charge route and its charge information. The controller 34 then transmits the information from the communication controller 32 to the Internet 15 (step S39).

A passenger therefore visually checks plural optimal routes and their associated information presented on the display 24, and selects the route which is most suitable for his or her demand. The passenger pays a charge for the selected optimal route before the transportation service is provided. Upon completion of the payment, the transportation service is provided by the taxi 12.

If a passenger changes the destination while the transportation service is being provided, the driver inputs the new destination from the input unit 23. After information regarding the new destination is fed to the controller 26, it generates information on its own present location in accordance with information received at that time via the GPS satellite 11. The resultant information (present-location information) is sent to the portable telephone terminal 27 together with the destination information.

Upon reception of new present-location information and new destination information from the controller 26, the portable telephone terminal 27 transmits these items of information to the center equipment 16 via the portable telephone network 13 and the Internet 15. The communication controller 32 of the center equipment 16 receives in step S40 that information via the Internet 15 and sends it to the controller 34.

When the controller 34 receives in step S41 from the communication controller 32 new information (new present-location information and new destination information) which have been sent from the taxi 12, the controller 34 reads from the map information storage section 33 map information corresponding to the present-location information and destination information

The controller 34 determines in step S42 a plurality of routes connecting the present location and the destination based on the new map information. The controller 34 then calculates a distance between the new present location and the new destination for each of the routes, according to the map information (step S43), and determines one of the plural routes as an optimal route which is a shortest-distance route having the shortest distance (step S44).

The controller 34 acquires latest ITS information received by the ITS information receiver 35, and calculates a required driving time for each route according to the new map information and the ITS information (step S45). The controller 34 then determines one of the routes as an optimal route which is a shortest-time route requiring the shortest required driving time (step S46).

The controller 34 reads in step S47 service-charge information from the preset charge information storage section 31, and generates charge information for each of the routes according to the service-charge information. After that the controller 34 determines one of the routes as an optimal route which is a lowest-charge route requiring the lowest charge (step S48).

In the next step, the controller 34 adds address information of the portable telephone terminal 27 to information including information on the shortest-distance route and its time information, information on the shortest-time route and its time information, and information on the lowest-charge route and its charge information. The controller 34 then transmits the information from the communication controller 32 to the Internet 15 (step S49).

A passenger therefore visually checks plural optimal routes and their associated information newly presented on the display 24, and reselects the route which is most suitable for his or her demand. The passenger pays a charge for the selected optimal route before the transportation service is provided. Upon completion of the payment, the transportation service is provided by the taxi 12.

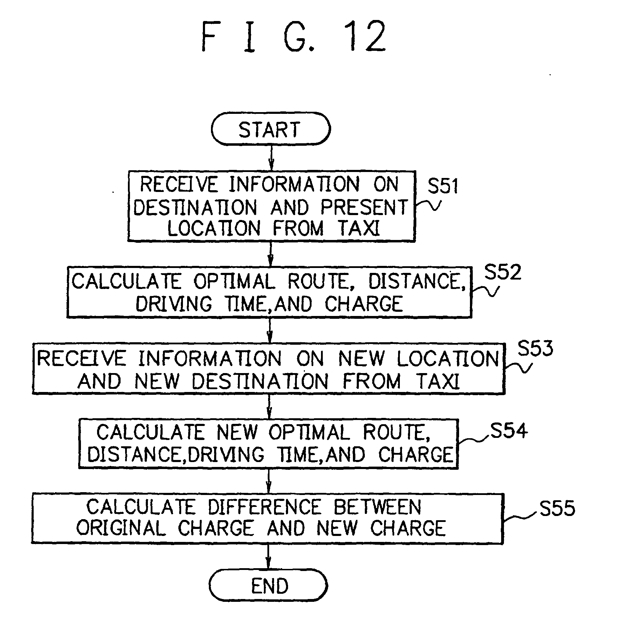

By referring to Fig. 12, description will be given in detail of a charge calculation operation performed by the controller 34 according to the third and fourth embodiments. Fig. 12 is a flowchart showing by way of example the charge calculation operation performed by the controller 34 according to the third embodiment.

In the third embodiment, the communication controller 32 receives the present-location information and the destination information sent from the taxi 12 and passes the received information to the controller 34 (step S51). As described above, the controller 34 reads from the map information storage section 33 map information corresponding to the received present-location information and destination information. Furthermore the controller 34 acquires ITS information from the ITS information receiver 35, and reads service-charge information from the preset charge information storage section 31. The controller 34 resultantly finds an optimal route, and calculates a distance, a required traveling time and a charge associated with the found route (step S52).

When there is a change in the destination by a passenger while the transportation service is being provided, the taxi 12 sends the new destination information and new present-location information at that time, which are received by the controller 34 (step S53). Similarly, the controller 34 reads from the map information storage section 33 map information corresponding to the received new present-location information and the new destination information. The controller 34 also acquires latest ITS information from the ITS information receiver 35, and reads service-charge information from the preset charge information storage section 31, thus resultantly finding an optimal route, and calculating a distance and a required traveling time associated with the optimal route (step S54).

The controller 34 subtracts a charge for a route from the new present location to the original destination, from the originally calculated charge. The controller 34 then adds a charge for a route from the new present location to the new destination, to the subtraction result. In the course of calculating the charge for a route from the new present location to the original destination, the controller 34 uses the original map information and the original ITS information. In the operation to calculate the charge for a route from the new present location to the new destination, the new map information and the new ITS information are utilized.

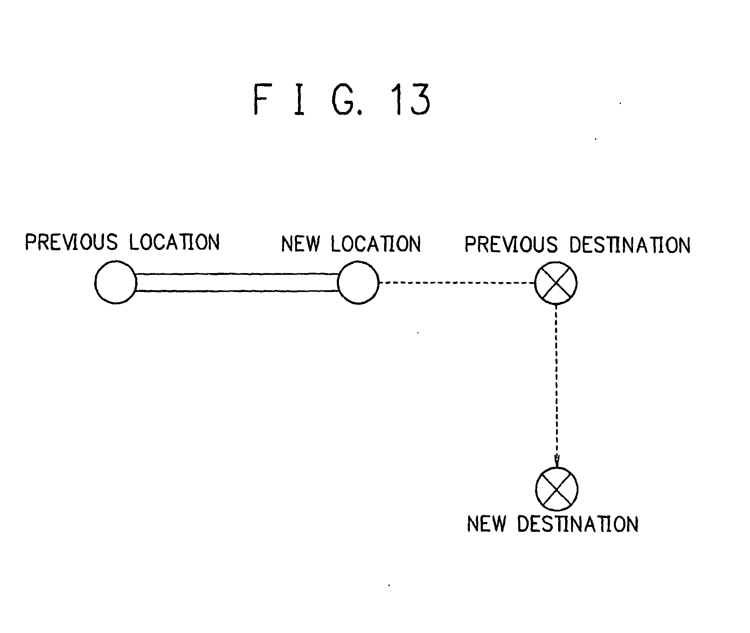

Fig. 13 shows a diagram in which the new present location is indicated as a new location, the original destination as a previous destination, the new destination as a new destination, and the former present location as a previous location.

If a charge for the new route is calculated by the controller 34, it also calculates a difference in charge (balance) between the original charge already paid by the passenger and the new charge (step S55). New charge information to which information on the balance is added is sent to the taxi 12.

For the fourth embodiment, the same processing as described above for the third embodiment can be applied. Specifically, by calculating a new charge for each of a plurality of routes based on the new present-location information and the new destination information, information on balance with respect to the original charge can be obtained. The passenger therefore pays for the balance presented on the display 24 or it is paid back to him or her, before the service is provided again.

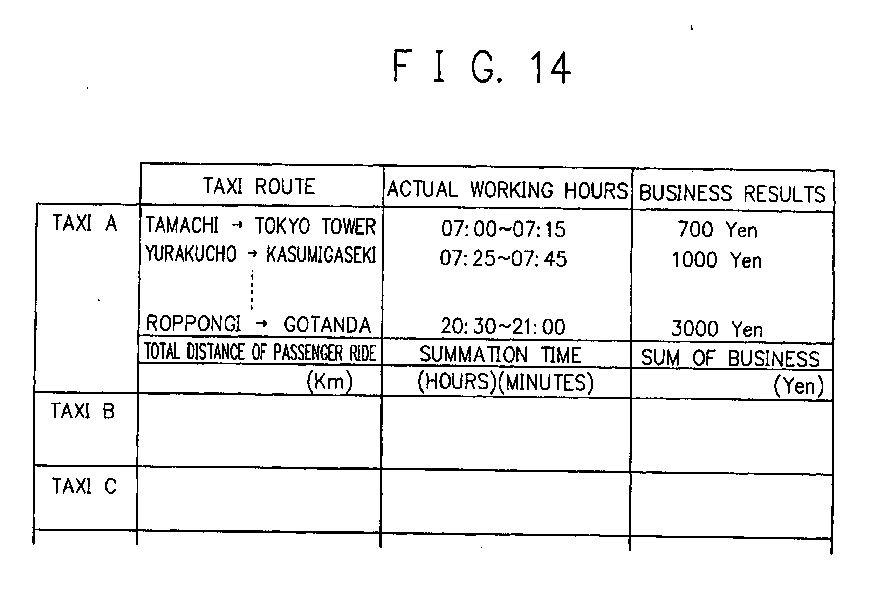

In the present embodiments, the center equipment 16 is capable of managing business results achieved by each taxi. Referring to the drawing, description will be given of a management method of each taxi executed by the center equipment 16. Fig. 14 is a table showing by way of example a management method of business results for each taxi performed by the center equipment 16.

As shown in Fig. 14, in this management method, taxis to which numbers are assigned are classified according to the telephone number of a portable telephone terminal possessed by each taxi. Taxi route, actual working hours, and business results are managed for each taxi. The taxi route indicates a route and its distance with respect to a transportation service provided by the taxi, which respectively correspond to an optimal route and a distance thereof calculated according to received present-location information and destination information.

Actual working hours indicate hours actually worked by the taxi, which corresponds to a time period, for example, from the time when the center equipment receives the present-location information and destination information and to the time when the taxi arrives at the destination. Arrival time to the destination is notified to the center equipment by a portable telephone terminal, if a driver inputs the arrival time from the input unit when he or she arrives at the destination.

Business results indicate sales proceeds done by the taxi. In the present invention, charge is calculated by the center equipment and a passenger pays for the charge, before the transportation service is provided. Therefore, charge information generated by the center equipment corresponds to the business results.

It is noted that the management items are shown in the table only by way of example according to the present invention, and are subject to be changed within the scope of the present invention.

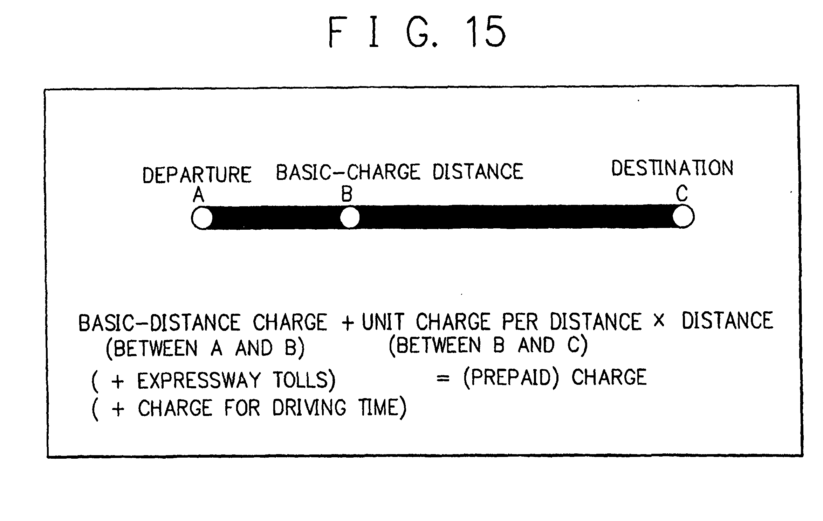

Service information stored in the preset charge information storage section 31 includes as shown in Fig. 15, a charge for driving a unit distance from point A to point B, a unit charge per distance in which a charge is added to every time a taxi runs a unit distance. Moreover, service information may include, for example, expressway tolls to be charged when a taxi uses an expressway, and a driving-time charge specified by a unit time to be added to at a fixed time interval.

As can be understood from the above description, in the present invention system, the function to find an optimal route based on the present location to the destination is allocated to the center equipment to control taxis in a centralized manner. This makes a taxi company realize the cost savings, and at the same time it makes easy business administration for each taxi.

According to the present invention, it is possible to present to a passenger a charge required for a transportation service and the like, before the service is provided. The passenger can therefore order the service at ease. Furthermore, by presenting that charge to a passenger as a transportation service charge and by receiving the charge from the passenger before the service is provided, the taxi company can avoid disbenefit caused by, say a free ride.

In the present invention, the center equipment finds depending upon different criteria a plurality of optimal routes which connect the present location to the destination, a passenger can therefore select an optimal route most suitable for his or her demand.

Furthermore, according to the present invention, even when a passenger changes the destination while the transportation service is being provided, the center equipment can find an optimal route and a charge for the route in conformity with the new destination. Accordingly, the transportation service can be provided without causing any operational problem to the new charge as well as business administration in the taxi company.

While the present invention has been described with reference to the particular illustrative embodiments, it is not to be restricted by those embodiments but only by the appended claims. It is to be appreciated that those skilled in the art can change or modify the embodiments without departing from the scope of the present invention as defined in the appended claims.

## Claims

1. A transportation service system, comprising:
at least one Global Positioning System GPS, satellite (11) for transmitting information used to detect a position of a moving object;
at least one taxi (12) having a GPS terminal (20) which receives said information from said GPS satellite (11) and detects a present location of said taxi (12) on the basis of said information, for transmitting present-location information regarding said detected present location and destination information indicating a destination specified by a customer; and
a center equipment (16) for receiving said present-location information and destination information, for finding at least one optimal route for each of plural different items to obtain optimal-route information in accordance with said present-location information and destination information, and for transmitting information including said optimal-route information to said taxi (12),
**characterized in that**, if the customer or the taxi changes the destination to a new destination when a service is being provided by said taxi (12),
said taxi detects by said GPS terminal (20) new present-location information at the time of said change and transmits to said center equipment (16) said detected new present-location information and new destination information indicating said new destination, and
said center equipment (16) finds in accordance with said new present-location information and new destination information, one or more respective new optimal routes for each of said plural different items to obtain new items of optimal-route information, and transmits information including each of said new items of optimal-route information to said taxi (12).

2. A transportation service system according to claim 1, wherein said center equipment (16) calculates in accordance with said present-location information and destination information a charge for each of said at least one optimal route to obtain charge information, and transmits information including said charge information to said taxi (12).

3. A transportation service system according to claim 1 or 2, wherein said center equipment (16) calculates in accordance with said present-location information and destination information a distance from said present location to said destination associated with each of said at least one optimal routes to obtain distance information, and transmits information. including said distance information to said taxi (12).

4. A transportation service system according to claim 1, 2, or 3, wherein said center equipment (16) calculates in accordance with said present-location information and destination information a required driving time associated with each of said at least one optimal route to obtain driving time information, and transmits information including said driving time information to said taxi (12).

5. A transportation service system according to claim 1, 2, 3 or 4, wherein said center equipment (16) calculates in accordance with said new present-location information and new destination information a charge for each of said respective new optimal routes to obtain charge information, and transmits information including said charge information to said taxi (12).

6. A transportation service system according to any one of claims 1 to 5, wherein said center equipment (16) calculates in accordance with said new present-location information and new destination information a distance from said new present location to said new destination associated with each of said new optical route or said respective new optimal routes to obtain distance information, and transmits information including said distance information to said taxi (12).

7. A transportation service system according to any one of claims 1 to 6, wherein said center equipment (16) calculates in accordance with said new present-location information and new destination information a required driving time required by said taxi (12), which is associated with each of said new optimal route or said respective new optimal routes, to obtain driving-time information, and transmits information including said driving-time information to said taxi (12).

8. A transportation service system according to any one of claims 1 to 7, wherein said plural different items include charges for said respective optimal routes, a distance from said present location to said destination associated with said respective optimal routes, and a required driving time required by said taxi (12) associated with said respective optimal routes.

9. A transportation service system according to any one of claims 4 to 8, wherein said center equipment (16) comprises:
a server (30) for communicating information with said taxi (12) and executing a predetermined processing; and
Intelligent Transportation System, ITS, information receiving means (35) connected to said server, for receiving ITS information offered by said ITS,
said server (30) comprising;
first communication control means (32) for communicating information with each of said at least one taxi (12),
first map-information storage means (33) for storing map information for each area;
preset-charge storage means (31) for storing service-charge information associated with a taxi company; and
first control means (34) connected to each of said first communication control means (32), said first map-information storage means (33), and said preset-charge storage means (31) for controlling each of said means,
wherein said first control means (34) reads from said first map-information storage means (33) map information corresponding to said destination information and said present-location information received by said first communication control means, obtains said ITS information from said ITS information receiving means (35), reads said service-charge information from said preset-charge storage means (31), and calculates in accordance with said map information, with said ITS information, and with said service-charge information, said at least one optimal route, a distance from said present location to said destination associated with said at least one optimal route, a required driving time associated with said at least one optimal route, and a charge for said at least one optimal route.

10. A transportation service system according to claim 9, wherein, if the customer changes the destination to a new destination when a service is being provided by said taxi (12),
said first communication control means (32) receives said new present-location information and new destination information, and said first control means (34) obtain new ITS information from said ITS information receiving means (35), reads from said first map-imformation storage means (33) new map information corresponding to said new present-location information and said new destination information, and finds according to said new ITS information, to said new map information, and to said new service-charge information a new optimal route or new respective optimal routes, a distance from said new present location to said new destination designated by said new optimal route or new respective optimal routes, a required driving time required by said taxi (12) associated with said new optimal route or new respective optimal routes, and a charge for said new optimal route or new respective optimal routes.

11. A transportation service system of any one of claims 4 to 8,
wherein said center equipment (16) comprises:
a server (30) for communicating information with said taxi (12) and executing a predetermined processing; and
Intelligent Transportation System, ITS, information receiving means (35) connected to said server, for receiving ITS information offered by said ITS,
said server (30) comprising:
first communication control means (32) for communicating information with each of said at least one taxi (12),
first map-information storage means (33) for storing map information for each area;
preset-charge storage means (31) for storing service-charge information associated with a taxi company; and
first control means (34) connected to each of said first communication control means (32), first map-information storage means (33), and preset-charge storage means (31), for controlling each of said first communication control means (32), first map-information storage means (33), and preset-charge storage means (31),
wherein said first control means (34) reads from said first map-information storage means (33) map information corresponding to said destination information and said present-location information received by said first communication control means, obtains said ITS information from said ITS information receiving means (35) reads said service-charge information from said preset-charge storage means (31), finds according to said map information a plurality of routes connecting said present location and destination, calculates according to said ITS information a required driving time for each of said plurality of routes to determine that a shortest-time route among said plural routes having the shortest required driving time is said optimal route, calculates according to said map information a distance from said present location to said destination associated with said shortest-time route, calculates a charge for said shortest-time route according to said service-charge information, generates information including shortest-time route information indicative of said shortest-time route, distance information indicative of said distance, and charge information indicative of said charge, and transmits said generated information via said first communication control means (32) to said taxi (12), by adding address information of said portable telephone terminal (27) to said generated information.

12. A transportation service system according to claim 11, wherein, if the customer changes the destination to a new destination when a service is being provided by said taxi (12),
said first communication control means (32) receives said new present-location information and new destination information, and sends said received information to said first control means (34), and said first control means (34) obtains new ITS information from said ITS information receiving means (35), reads from said first map-imformation storage means (33) new map information corresponding to said new present-location information and said new destination information, finds according to said new map information a plurality of routes connnecting said new present invention location and new destination, calculates according to said ITS information a required driving time for each of said new plurality of routes to determine that a news shortest-time route among said new plural routes having the shortest required driving time is said optimal route, calculates according to said new map information a distance associated with shortest-time route, calculates a charge for said new shortest-time route according to said service-charge information, generates information including new shortest-time route information indicative of said new shortest-time route, new distance information indicative of said distance, and new charge information indicative of said charge, and transmits said generated information via said first communication control means (32) to said taxi (12), by adding address information of a portable telephone terminal (27) to said generated information.

13. A transportation service system according to any one of claims 4 to 8, wherein said center equipment (16) comprises:
a server (30) for communicating information with said taxi (12) and executing a predetermined processing; and
Intelligent Transportation System, ITS, information receiving means (35) connected to said server, for receiving ITS information offered by said ITS,
said server (30) comprising:
first communication control means (32) for communicating information with each of said at least one taxi (12),
first map information storage means (33) for storing map information for each area;
preset-charge storage means (31) for storing service-charge information associated with a taxi company; and
first control means (34) connected to each of said flist communication control means (32), first map-information storage means (32), and preset-charge storage means (21), for controlling each of said first communication control means (32), first map-information storage means (33), and preset-charge storage means (31),
wherein said first control means (34) reads from said first map-information storage means (33) map information corresponding to said destination information and said present-location information received by said first communication control means (32), obtains said ITS information from said ITS information receiving means (35), reads said service-charge information from said preset-charge storage means (31), finds according to said map information a plurality of routes connecting said present location and destination, calculates according to said map information a distance from said present location to said destination associated with each of said plurality of routes to determine that a shortest-distance route among said plurality of routes is an optimal route having the shortest distance, calculates according to said ITS information a required driving time for each said plurality of routes to determine that a shortest-time route among said plurality of routes is an optimal route having the shortest required driving time, calculates according to said service-charge information a charge for each of said plurality of routes to determine that a lowest-charge route among said plurality of routes is an optimal route, generates information including information indicating said shortest-distance route and its associated distance, information indicating said shortest-time route and its associated time, and information indicating said lowest-charge route and its associated charge, and transmits said generated information via said first communication control means (32) to said taxi (12) by adding address information of a portable telephone terminal (27) to said generated information.

14. A transportation service system according to claim 13, wherein, if the customer changes the destination to a new destination when a service is being provided by said taxi (12),
said first communication control means (32) receives said new present-location information and new destination information, and sends said received information to said first control means (34), and said first control means (34) obtains new ITS information from said ITS information receiving means (35), reads from said first map-information storage means (33) new map information corresponding to said new present-location information and said new destination information, reads said service-charge information from said preset-charge storage means (31), finds according to said new map information a plurality of routes connecting said new present location and new destination, calculates according to said ITS information a required driving time for each of said new plurality of routes to determine that a shortest-time route among said new plural routes having the shortest required driving time is said optimal route, calculates according to said new map information a distance from said new present location to said new destination associated with said new plural routes to determine that a shortest-distance route among said plurality of routes is one of said optimal routes having the shortest distance, calculates according to said service-charge information a charge for each of said plural routes to determine that a lowest-charge route among said plurality of routes is one of said optimal routes having the lowest charge, generates information including shortest-time route information indicative of said shortest-time route, shortest-distance route information indicative of said shortest-distance route, and lowest-charge route information indicative of said lowest-charge route, and transmits said generated information via said first communication control means (32) to said taxi (12) by adding address information of said portable telephone terminal (27) to said generated information.

15. A transportation service system according to claim 12, 13 or 14,
wherein, if the customer changes the destination to a new destination when a service is being provided by said taxi (12), said first control means (34) calculates a first charge for a route from said new present location to said destination according to said map information, said ITS information, and said service-charge information, calculates a second charge for a route from said new present location to said new destination according to said new map information, to said new ITS information, and to said service-charge information, subtracts said second charge from said first charge, and adds said second charge to said subtraction result to calculate said new charge.

16. A transportation service system according to claim 15,
wherein said first control means (34) calculates a balance between said first charge and said new charge, and transmits to said taxi (12) information on said balance together with information regarding said first charge via said first communication control means (32).

17. A transportation service system according to any one of claims 11 to 16, wherein said taxi (12) has said GPS terminal (20) and second communication control means (22) connected to said GPS terminal (20), for communicating information with said center equipment (16), said GPS terminal (20) comprising;
input means (23) for inputting a destination specified by the customer,
second map-information storage means (25) for storing map information for each area,
image display means (24) for displaying an image, and
second control means (26) connected to said input means (23), second map-information storage means (25), and image display means (24), for controlling each of said means,
said second control means (26) detecting said present-location information from radio waves received from said GPS satellite (11), and sending to said first communication control means (32) said present-location information and destination information indicative of said destination inputted from said input means (23),
said second communication control means (22) sending to said center equipment (16) said present-location information and said destination information received from said second control means (26), and sending to said second control means (26) information received from said center equipment (16), and said second control means (26) reading from said second map-information storage means (25) map information corresponding to said at least one optimal route included in information received from said second communication control means (22), displayig on said image display means (24) said at least one optimal route by superposing the route on said map information, and displaying a distance from said present location to said destination associated with said at least one optimal route included in said information transmitted from said center equipment (16), a required driving time associated with said at least one optimal route, and a charge for said at least one optimal route.

18. A transportation service system according to claim 17, wherein in said taxi (12), if the customer changes the destination to a new destination when a service is being provided by said taxi (12), said second communication control means (22) receives new information sent from said center equipment (16), said second control means (26) reads from said second map-information storage means (25) new map information corresponding to said new optimal route or said respective new optimal routes included in said new information, and said image display means (24) displays said new map information on which said new optimal route or said respective new optimal routes is superposed, and a distance from said new present location to said new destination associated with said new optimal route or said respective new optimal routes included in said new information, a required driving time associated with said new optimal route or said respective new optimal routes, and a charge for said new optimal route or said respective new optimal routes..

19. A transportation service system according to any one of the preceding claims, wherein said center equipment (16) administers information obtained for said at least one optimal route for every taxi (12).

20. A transportation service system according to any one of claims 4 to 19, wherein said center equipment (16) administers information obtained for said new optimal route for every taxi (12).

21. A transportation service system according to any one of claims 1 to 20, wherein, for every taxi (12), said center equipment (16) administers said information obtained with respect to said respective optimal routes, which has been obtained for an optimal route selected by the customer from among said optimal routes.

22. A transportation service system according to any one of claims 4 to 21, wherein, for every taxi (12), said center equipment (16) administers said information obtained with respect to said respective new optimal routes, which has been obtained for an optimal route selected by the customer from among said new optimal routes.

23. A method of providing a transportation service in a system which comprises at least one Global Positioning System, GPS, satellite (11), a GPS terminal (20), a center equipment (16), and at least one taxi (12) on which said GPS terminal (20) is mounted, said method comprising the steps of:
detecting by said GPS terminal (20) its present location according to information for finding a position of a moving object transmitted from said GPS satellite (11),
transmitting from said taxi (12) present-location information on said present location, and destination information indicating a destination specified by a customer; and
receiving by said center equipment (16) said present-location information and said destination information, obtaining optimal-route information on at least one optimal route for each of plural different items according to said present-location information and destination information, and transmitting information including said optimal-route information to said taxi, **characterized in that** selecting by the customer one of optimal routes before a transportation service is provided by said taxi, if the customer changes the destination to a new destination when a service is being provided by said taxi, said taxi (12) obtains by using said GPS terminal (20) present-location information on a present location at the time of said change, and transmits to said center equipment (16) said present-location information and destination information indicating said new destination, and wherein said center equipment finds a new optimal route or respective new optimal routes for each of said plural different items according to said new present-location information and said new destination information to obtain optimal-route information regarding a new optimal route, and transmits information including said optimal-route information to said taxi (12).

24. A method according to claim 23, further including the steps of calculating by said center equipment (16) charge information on charges for said at least one optimal routes according to said present-location information and destination information, and transmitting information including said charge information to said taxi.

25. A method according to claim 23 or 24, further including steps of and paying a charge indicated by said charge information on said optimal route or said selected optimal route, before a transportation service is provided by said taxi.

26. A method according to claim 23, 24 or 25, further including the steps of obtaining by said center equipment (16) distance information regarding a distance from said present location to said destination associated with said at least one optimal route according to said present-Iocation information and destination information, and transmitting said information including said distance information to said taxi (12).

27. A method according to claim 23, 24, 25, or 26, further including the steps of obtaining by said center equipment (16) driving time information on a required driving time associated with said at least one optimal routes according to said present-location information and destination information, and transmitting information including said driving-time information to said taxi (12).

28. A method according to claim 27 further, said center equipment (16) further obtains new charge information on charges for said respective new optimal routes according to said new present-location information and new destination information, and transmits said information including said new charge information to said taxi (12).

29. A method according to claim 27 or 28, wherein the customer selects an optimal route from among said respective new optimal routes before said taxi (12) provides a transportation service associated with said new destination.

30. A method according to claim 28 or 29, wherein the customer pays for a charge indicated by charge information on said means optimal route or said selected optimal route, respectively, before said taxi provides a transportation service associated with said was destination.

31. A method according to any one of claims 27 to 30, wherein to said center equipment (16) further obtains distance information on a distance from said new present location to said new destination associated with said respective new optimal routes according to said new present-location information and new destination information, and transmits said information including said distance information to said taxi (12).

32. A method according to any one of claims 27 to 31, wherein said center equipment (16) further obtains driving-time information on a required driving time associated with said respective new optimal routes according to said new present-location information and new destination information, and transmits said information including said driving-time information to said taxi (12).

33. A method according to any one of claims 23 to 32, wherein said plural different items include charges for said respective optimal routes, a distance from said present location to said destination associated with said respective optimal routes, and a required driving time required by said taxi (12) associated with said respective optimal routes.

34. A method according to claim 23, wherein said system further comprises
a portable telephone terminal (27) being mounted on said at least one taxi,
said center equipment (16) having a communication controller (32), a controller (34), a map-information storage unit (33), a preset-charge information storage unit (31), and an ITS information receiver (35), said method further comprising the steps of:
transmitting from said portable telephone terminal (27) present-location information on said present location and destination information indicating a destination specified by a customer of said taxi (12),
receiving by said communication controller (32) said present-location information and destination information, and reading from said map-information storage unit (33), under the control of said controller (34), map information corresponding to said present-location information and destination information;
finding by said controller (34) according to said read map information, a plluality of routes connecting said present location and destination;
receiving by said ITS information receiver (35) ITS information provided by the ITS, and acquiring said ITS information by said controller (34);
calculating by said controller (34) according to said acquired ITS information a required driving time for each of said plural routes;
determining by said controller (34) an optimal route from said plural routes, which is a shortest-time route having a shortest required driving time;
calculating by said controller (34) according to said map information a distance between said present location and destination associated with said shortest-time route;
reading from said preset-charge information storage unit (31) under the control of said controller (34), service-charge information associated with a. taxi company;
calculating by said controller (34) according to said read service-charge information, a charge for said shortest-time route; and
generating by said controller (34) information including shortest-time route information indicative of said shortest-time route, distance information indicative of said distance, and charge information indicative of said charge, and transmitting said information from said communication controller (32) to said taxi (12) by adding address information of said portable telephone terminal (27) to sadi generated information.

35. A method according to claim 34, wherein said customer pays for a charge indicated by said charge information, before a transportation service associated with said destination is provided by said taxi (12).

36. A method according to claim 34, further comprising, if the customer changes the destination to a new destination when a service is being provided by said taxi (12), the steps of;
reading from said map-information storage unit (33) by said controller (34), new map information corresponding to said new present-location information and new destination information;
finding by said controller (34) according to said new map information, a plurality of new routes connecting said new present location and said new destination;
receiving by said ITS information receiver (35) ITS information provided by the ITS, and acquiring said ITS information by said controller (34);
calculating by said controller (34) according to said acquired ITS information a required driving time for each of said plural new routes;
determining by said controller (34) an optimal route from said plural new routes, which is a new shortest-time route having the shortest required driving time;
calculating by said controller (34) according to said new map information, a new distance between said new present location and new destination associated with said new shortest-time route;
calculating by said controller (34) according to said service-charge information, a charge for said new shortest-time route; and
generating by said controller (34) information including shortest-time route information indicative of said new shortest-time route, distance information indicative of said new distance, and charge information indicative of said new charge, and transmitting said information from said communication controller (32) to said taxi (12) by adding address information of said portable telephone terminal (22) to said generated information.

37. A method according to claim 36, wherein said customer pays for a charge indicated by said new charge information, before a transportation service associated with said new destination is provided by said taxi (12).

38. A method according to claim 23, wherein said system further comprises a portable telephone terminal (27) being mounted on said at least one taxi, said center equipment (16) having a communication controller (32), a controller (34), a map-information storage unit (33), a preset-charge information storage unit (31), and an ITS information receiver (35), said method further comprising the steps of:
transmitting from said portable telephone terminal (27) present-location information on said present location and destination information indicating a destination specified by a customer of said taxi (12),
receiving by said communication controller (32) said present-location information and destination information, and reading from said map-information storage unit (33), under the control of said controller (34), map information corresponding to said present-location information and destination information;
finding by said controller (34) according to said read map information, a plurality of routes connecting said present location and destination;
calculating by said controller (34) according to said map information, a distance from said present location to said destination for each of said plural routes;
determining by said controller (34) one of optimal routes which is a shortest route having the shortest distance among said plural routes;
receiving by said ITS information receiver (35) ITS information provided by the ITS; and acquiring said ITS information by said controller;
calculating by said controller (34) according to said acquired ITS information, a required driving time for each of said plural routes;
determining by said controller (34) one of optimal routes which is a shortest-time route having a shortest required driving time among said plural routes;
reading from said preset-charge information storage unit (31) under the control of said controller (34), service-charge information associated with a taxi company;
calculating by said controller (34) according to said service-charge information, a charge for each of said plural routes;
determining by said controller (34) one of optimal routes which is a lowest-charge route having a lowest charge among said plural routes; and
generating by said controller (34) information including information indicating said shortest-distance route and its distance, information indicating said shortest-time route and its time, and information indicating -said lowest-charge route and its charge, and transmitting said information to said taxi (12) by adding address information of said portable telephone terminal (27) to said generated information.

39. A method according to claim 38, further including steps of selecting by the customer one of said optimal routes before a transportation service associated with said destination is provided by said taxi (12), and paying a charge indicated by said charge information on said selected optimal route.

40. A method according to claim 39, further comprising, if the customer changes the destination to a new destination when a service is being provided by said taxi (12), the steps of;
transmitting by said taxi (12) from said portable telephone terminal (27) to said center equipment (16) present-location information at the time of said change and destination information indicating said new destination;
receiving by said center equipment (16) using said communication controller (32), said new present-location information and said new destination information,
reading from said map-information storage unit (33) by said controller (34), new map information corresponding to said new present-location information and new destination information;
finding by said controller (34) according to said new map information, a plurality of new routes connecting said new present location and said new destination;
calculating by said controller (34) according to said new map information a distance from said new present location to said new destination for each of said optimal routes;
determining by said controller (34) a new route as one of optimal routes which is a shortest route having the shortest distance among said plural routes;
acquiring by said controller (34) new ITS information from said ITS information receiver (35);
calculating by said controller (34) according to said acquired ITS information a required driving time for each of said plural routes;
determining by said controller (34) a new route as one of optimal routes, which is a shortest-time route among said plural routes having the shortest required driving time;
calculating by said controller (34) according to said service-charge information a charge for each of said plural routes;
determining by said controller (34) a new route as one of optimal routes, which is a lowest-charge route among said plural routes having the lowest charge; and
generating by said controller (24) information including new shortest-distance route information indicating said shortest-distance route, new shortest-time route information indicating said new shortest-time route, and new lowest-charge route information indicating said lowest-charge route, and transmitting said information to said taxi (12) by adding address information of said portable telephone terminal (27) to said generated information.

41. A method according to claim 40, further including steps of selecting by the customer one of said new optimal routes before a transportation service associated with said new destination is provided by said taxi (12), and paying a charge indicated by said charge information on said selected optimal route.

42. A method according to claim 38 or 41, wherein, if the customer changes the destination to a new destination when a service is being provided by said taxi (12), said controller (34) calculates a first charge for a route from said new present location to said destination according to said map information, to said ITS information, and to said service-charge information, calculates a second charge for a route from said new present location to said new destination according to said new map information, to said new ITS information, and to said service-charge information, subtracts said second charge from said first charge, and adds said second charge to said subtraction result to calculate said new charge.

43. A method according to claim 42, wherein said controller (34) calculates a balance between said first charge and said new charge, and transmits to said taxi information on said balance together with information regarding said first charge via said communication controller (32).

44. A method according to claim 34, wherein said taxi (12) receives by said portable telephone terminal (27) information transmitted from said center equipment (16), reads from said map-information storage unit (25) of said GPS terminal, under the control of a controller (26) of said GPS terminal (20), map information corresponding to said optimal route included in said received information, displays on an image display (24) said map information on which said optimal route is superposed, and displays a distance from said present location to said destination associated with said optimal route, a required driving time of said taxi (12) associated with said optimal route, and a charge for said optimal route, included in said information sent from said center equipment (16).

45. A method according to claim 38, wherein said taxi (12) receives by said portable telephone terminal (27) information transmitted from said center equipment (16), reads from said map-information storage unit (25) of said GPS terminal (20), under the control of a controller (26) of said GPS terminal (20), map information corresponding to said optimal route included in said received information, displays on an image display (24) said map information on which said optimal route is superposed, and displays a distance from said present location to said destination associated with said respective optimal routes, a required driving time of said taxi (12) associated with said respective optimal routes, and charges for said respective optimal routes, included in said information sent from said center equipment (16).

46. A method according to claim 34, wherein, if the customer changes the destination to a new destination when a service is being provided by said taxi (12), said taxi (12) receives by said portable telephone terminal (27) new information sent from said center equipment (16), reads from said map-information storage unit (25) of said GPS terminal (20), under the control of a controller (26) of said GPS terminal (20), new map information corresponding to said new optimal route included in said new information received from said center equipment (16), displays on an image display (24) said new map information on which said new optimal route is superposed, and displays a distance from said new present location to said new destination associated with said new optimal route, a required driving time of said taxi (12) associated with said new optimal route, and a charge for said new optimal route, included in said new information.

47. A method according to claim 38, wherein, if the customer changes the destination to a new destination when a service is being provided by said taxi (12), said taxi (12) receives by said portable telephone terminal (27) new information sent from said center equipment (16), reads from said map-information storage unit (25) of said GPS terminal (20), under the control of a controller (26) of said GPS terminal (20), new map information corresponding to said respective new optimal routes included in said new information received from said center equipment (16), displays on an image display (24) said new map information on which said respective new optimal routes are superposed, and displays a distance from said new present location to said new destination associated with said respective new optimal routes, a required driving, time of said taxi (12) associated with said respective new optimal routes, and charges for said respective new optimal routes, included in said new information.

48. A method according to claim 46 or 47, wherein said center equipment (16) administers information obtained for said new optimal route for every taxi (12).

49. A method according to claim 46, wherein, for every taxi (12) said center equipment (16) administers said information obtained with respect to said respective optimal routes, which has been obtained for an optimal route selected from among said optimal routes by the customer.

50. A method according to claim 47, wherein, for every taxi (12), said center equipment (16) administers said information obtained with respect to said respective new optimal routes, which has been obtained for an optimal route selected from among said new optimal routes by the customer.

51. A method according to claim 23 further comprising the steps of:
presenting to a customer by a taxi driver a charge for a transportation service corresponding to a destination specified by the customer when the customer gets in the taxi (12), and
paying for said charge by the customer before said transportation service is provided by the taxi (12).

52. A method according to claim 51, wherein said charge is calculated according to a present location where the customer gets in the taxi (12) and to said destination.

53. A method according to claim 52, further comprising, if there is a change in the destination to a new destination during said transportation service is being provided by said taxi (12), the steps of;
calculating a new charge according to a present location at the time of said change and said new destination, said new charge being presented to the customer by the driver; and
paying by the customer said new charge before said transportation service associated with said new destination is provided by the taxi (12).

54. A method according to claim 53, wherein said charge is calculated for an optimal route between said present location and said destination.

55. A method according to claim 23, further comprising the steps of:
finding said respective optimal routes between a destination specified by a customer when the customer gets in the taxi (12) and said present location at the time of said change, for said respective different items;
calculating for said respective optimal routes charges for said transportation service provided by the taxi (12);
presenting to a customer by a taxi driver each of said charges calculated respectively for said optimal routes; and
selecting by the customer one of said optimal routes, and paying by the customer for a charge for said selected optimal route, before said transportation service is provided by the taxi (12).

56. A method according to claim 55, further comprising, if there is a change in the destination to a new destination during said transportation service is being provided by said taxi (12), the steps of;
finding new optimal routes between a new destination at the time of said change and said new destination, for said respective different items;
calculating new charges for said transportation service provided by the taxi (12), for each of said new optimal routes;
presenting to the customer by the taxi driver each of said new charges calculated for each of said new optimal routes; and
selecting by the customer one of said new optimal routes, and paying by the customer a charge for said selected optimal route, before said transportation service associated with said new destination is provided by the taxi (12).

## Patentansprüche

1. Transportdienstsystem mit:
mindestens einem Satelliten (11) des globalen Positionierungssystems GPS zum Übertragen von Informationen, die zum Erfassen der Position eines beweglichen Objekts verwendet werden,
mindestens einem Taxi (12) mit einem GPS-Endgerät (20), das die Informationen vom GPS-Satelliten (11) empfängt und den gegenwärtigen Ort des Taxis (12) auf der Grundlage der Informationen erfasst, zum Übertragen von Informationen über den gegenwärtigen Ort in Bezug auf den erfassten gegenwärtigen Ort und von Zielinformationen, welche ein von einem Kunden spezifiziertes Ziel angeben, und
einem Zentralgerät (16) zum Empfangen der Informationen über den gegenwärtigen Ort und der Zielinformationen, zum Finden mindestens eines optimalen Wegs für jeden von mehreren verschiedenen Gegenständen, um optimale Weginformationen entsprechend den Informationen über den gegenwärtigen Ort und Zielinformationen zu erhalten, und zum Übertragen von Informationen einschließlich der Informationen über den optimalen Weg zu dem Taxi (12),
**dadurch gekennzeichnet, dass**
falls der Kunde des Taxis das Ziel zu einem neuen Ziel wechselt, wenn ein Dienst durch das Taxi (12) bereitgestellt wird,
das Taxi durch das GPS-Endgerät (20) Informationen über den neuen gegenwärtigen Ort zur Zeit des Wechsels erfasst und die erfassten Informationen über den neuen gegenwärtigen Ort und die neuen Zielinformationen, welche das neue Ziel angeben, zum Zentralgerät (16) überträgt, und
das Zentralgerät (16) entsprechend den Informationen über den neuen gegenwärtigen Ort und den neuen Zielinformationen einen oder mehrere jeweilige neue optimale Wege für jeden der mehreren verschiedenen Gegenstände findet, um neue Bestandteile optimaler Weginformationen zu erhalten, und Informationen einschließlich von jedem der neuen Bestandteile optimaler Weginformationen zu dem Taxi (12) überträgt.

2. Transportdienstsystem nach Anspruch 1, wobei das Zentralgerät (16) entsprechend den Informationen über den gegenwärtigen Ort und den Zielinformationen eine Gebühr für jeden Weg der mindestens einen optimalen Wege berechnet, um Gebühreninformationen zu erhalten, und Informationen einschließlich der Gebühreninformationen zu dem Taxi (12) überträgt.

3. Transportdienstsystem nach Anspruch 1 oder 2, wobei das Zentralgerät (16) entsprechend den Informationen über den gegenwärtigen Ort und den Zielinformationen eine Entfernung von dem gegenwärtigen Ort zum Ziel berechnet, die jedem der mindestens einen optimalen Wege zugeordnet ist, um Entfernungsinformationen zu erhalten, und Informationen einschließlich der Entfernungsinformationen zu dem Taxi (12) überträgt.

4. Transportdienstsystem nach Anspruch 1, 2 oder 3, wobei das Zentralgerät (16) entsprechend den Informationen über den gegenwärtigen Ort und den Zielinformationen eine jedem der mindestens einen optimalen Wege zugeordnete erforderliche Fahrzeit berechnet, um Fahrzeitinformationen zu erhalten, und Informationen einschließlich der Fahrzeitinformationen zu dem Taxi (12) überträgt.

5. Transportdienstsystem nach Anspruch 1, 2, 3 oder 4,
wobei das Zentralgerät (16) entsprechend den Informationen über den neuen gegenwärtigen Ort und den neuen Zielinformationen eine Gebühr für jeden der jeweiligen neuen optimalen Wege berechnet, um Gebühreninformationen zu erhalten, und Informationen einschließlich der Gebühreninformationen zu dem Taxi (12) überträgt.

6. Transportdienstsystem nach einem der Ansprüche 1 bis 5, wobei das Zentralgerät (16) entsprechend den Informationen über den neuen gegenwärtigen Ort und neuen Zielinformationen eine Entfernung von dem neuen gegenwärtigen Ort zu dem neuen Ziel berechnet, die jedem der neuen optimalen Wege oder den jeweiligen neuen optimalen Wegen zugeordnet ist, um Entfernungsinformationen zu erhalten, und Informationen einschließlich der Entfernungsinformationen zu dem Taxi (12) überträgt.

7. Transportdienstsystem nach einem der Ansprüche 1 bis 6, wobei das Zentralgerät (16) entsprechend den Informationen über den neuen gegenwärtigen Ort und den neuen Zielinformationen eine von dem Taxi (12) benötigte erforderliche Fahrzeit berechnet, die jedem der neuen optimalen Wege oder den jeweiligen neuen optimalen Wegen zugeordnet ist, um Fahrzeitinformationen zu erhalten, und Informationen einschließlich der Fahrzeitinformationen zu dem Taxi (12) überträgt.

8. Transportdienstsystem nach einem der Ansprüche 1 bis 7, wobei die mehreren verschiedenen Gegenstände Gebühren für die jeweiligen optimalen Wege, eine Entfernung von dem gegenwärtigen Ort zu dem Ziel, die den jeweiligen optimalen Wegen zugeordnet ist, und eine von dem Taxi (12) benötigte erforderliche Fahrzeit, die den jeweiligen optimalen Wegen zugeordnet ist, einschließen.

9. Transportdienstsystem nach einem der Ansprüche 4 bis 8, wobei das Zentralgerät (16) aufweist:
einen Server (30) zum Austauschen von Informationen mit dem Taxi (12) und zum Ausführen einer vorgegebenen Verarbeitung und
eine mit dem Server verbundene Empfangseinrichtung (35) für Informationen vom intelligenten Transportsystem ITS zum Empfangen von durch das ITS angebotenen ITS-Informationen,
wobei der Server (30) aufweist:
eine erste Kommunikationssteuereinrichtung (32) zum Austauschen von Informationen mit jedem der mindestens einen Taxis (12),
eine erste Karteninformations-Speichereinrichtung (33) zum Speichern von Karteninformationen für jedes Gebiet,
eine Speichereinrichtung (31) für vorgegebene Gebühren zum Speichern von einer Taxigesellschaft zugeordneten Dienstgebühreninformationen und
eine erste Steuereinrichtung (34), die mit jeder von der ersten Kommunikationssteuereinrichtung (32), der ersten Karteninformations-Speichereinrichtung (33) und der Speichereinrichtung (31) für vorgegebene Gebühren verbunden ist, um jede der Einrichtungen zu steuern,
wobei die erste Steuereinrichtung (34) aus der ersten Karteninformations-Speichereinrichtung (33) Karteninformationen liest, die den Zielinformationen und den Informationen über den gegenwärtigen Ort entsprechen, welche von der ersten Kommunikationssteuereinrichtung empfangen wurden, die ITS-Informationen von der ITS-Informationsempfangseinrichtung (35) erhält, die Dienstgebühreninformationen aus der Speichereinrichtung (31) für vorgegebene Gebühren liest und entsprechend den Karteninformationen, den ITS-Informationen und den Dienstgebühreninformationen den mindestens einen optimalen Weg, eine Entfernung vom gegenwärtigen Ort zum Ziel, die dem mindestens einen optimalen Weg zugeordnet ist, die erforderliche Fahrzeit, die dem mindestens einen optimalen Weg zugeordnet ist, und eine Gebühr für den mindestens einen optimalen Weg berechnet.

10. Transportdienstsystem nach Anspruch 9, wobei, falls der Kunde des Taxis das Ziel zu einem neuen Ziel wechselt, wenn ein Dienst durch das Taxi (12) bereitgestellt wird,
die erste Kommunikationssteuereinrichtung (32) die Informationen über den neuen gegenwärtigen Ort und die neuen Zielinformationen empfängt und die erste Steuereinrichtung (34) neue ITS-Informationen von der ITS-Informationsempfangseinrichtung (35) erhält, aus der ersten Karteninformations-Speichereinrichtung (33) neue Karteninformationen liest, die den Informationen über den neuen gegenwärtigen Ort und den neuen Zielinformationen entsprechen, und entsprechend den neuen ITS-Informationen, den neuen Karteninformationen und den neuen Dienstgebühreninformationen einen neuen optimalen Weg oder neue jeweilige optimale Wege, eine Entfernung vom neuen gegenwärtigen Ort zum neuen Ziel, die durch den neuen optimalen Weg oder die neuen jeweiligen optimalen Wege festgelegt ist, eine vom Taxi (12) benötigte erforderliche Fahrzeit, die dem neuen optimalen Weg oder den neuen jeweiligen optimalen Wegen zugeordnet ist, und eine Gebühr für den neuen optimalen Weg oder die neuen jeweiligen optimalen Wege findet.

11. Transportdienstsystem nach einem der Ansprüche 4 bis 8, wobei das Zentralgerät (16) aufweist:
einen Server (30) zum Austauschen von Informationen mit dem Taxi (12) und zum Ausführen einer vorgegebenen Verarbeitung und
eine mit dem Server verbundene Empfangseinrichtung (35) für Informationen vom intelligenten Transportsystem ITS zum Empfangen von durch das ITS angebotenen ITS-Informationen,
wobei der Server (30) aufweist:
eine erste Kommunikationssteuereinrichtung (32) zum Austauschen von Informationen mit jedem der mindestens einen Taxis (12),
eine erste Karteninformations-Speichereinrichtung (33) zum Speichern von Karteninformationen für jedes Gebiet,
eine Speichereinrichtung (31) für vorgegebene Gebühren zum Speichern von einer Taxigesellschaft zugeordneten Dienstgebühreninformationen und
eine erste Steuereinrichtung (34), die mit jeder von der ersten Kommunikationssteuereinrichtung (32), der ersten Karteninformations-Speichereinrichtung (33) und der Speichereinrichtung (31) für vorgegebene Gebühren verbunden ist, um jede von der ersten Kommunikationssteuereinrichtung (32), der ersten Karteninformations-Speichereinrichtung (33) und der Speichereinrichtung (31) für vorgegebene Gebühren zu steuern,
wobei die erste Steuereinrichtung (34) aus der ersten Karteninformations-Speichereinrichtung (33) Karteninformationen liest, die den Zielinformationen und den Informationen über den gegenwärtigen Ort entsprechen, welche von der ersten Kommunikationssteuereinrichtung empfangen wurden, die ITS-Informationen von der ITS-Informationsempfangseinrichtung (35) erhält, die Dienstgebühreninformationen aus der Speichereinrichtung (31) für vorgegebene Gebühren liest, entsprechend den Karteninformationen mehrere Wege findet, die den gegenwärtigen Ort und das Ziel verbinden, entsprechend den ITS-Informationen eine erforderliche Fahrzeit für jeden der mehreren Wege berechnet, um zu bestimmen, dass ein Weg mit der kürzesten Fahrzeit unter den mehreren Wegen mit der kürzesten erforderlichen Fahrzeit der optimale Weg ist, entsprechend den Karteninformationen eine Entfernung vom gegenwärtigen Ort zu dem Ziel berechnet, die dem Weg mit der kürzesten Fahrzeit zugeordnet ist, eine Gebühr für den Weg mit der kürzesten Fahrzeit entsprechend den Dienstgebühreninformationen berechnet, Informationen erzeugt, welche Informationen über den Weg mit der kürzesten Fahrzeit, Entfernungsinformationen und Gebühreninformationen einschließen, und die erzeugten Informationen über die erste Kommunikationssteuereinrichtung (32) zu dem Taxi (12) überträgt, indem Adressinformationen des tragbaren Telefonendgeräts (27) zu den erzeugten Informationen hinzugefügt werden.

12. Transportdienstsystem nach Anspruch 11, wobei, falls der Kunde des Taxis das Ziel zu einem neuen Ziel wechselt, wenn ein Dienst durch das Taxi (12) bereitgestellt wird,
die erste Kommunikationssteuereinrichtung (32) die Informationen über den neuen gegenwärtigen Ort und die neuen Zielinformationen empfängt und die empfangenen Informationen zu der ersten Steuereinrichtung (34) sendet und die erste Steuereinrichtung (34) neue ITS-Informationen von der ITS-Informationsempfangseinrichtung (35) erhält, aus der ersten Karteninformations-Speichereinrichtung (33) neue Karteninformationen liest, die den Informationen über den neuen gegenwärtigen Ort und den neuen Zielinformationen entsprechen, entsprechend den neuen Karteninformationen mehrere Wege findet, die den neuen gegenwärtigen Ort und das neue Ziel verbinden, entsprechend den ITS-Informationen eine erforderliche Fahrzeit für jeden der mehreren neuen Wege berechnet, um zu bestimmen, dass ein neuer Weg mit der kürzesten Fahrzeit unter den mehreren neuen Wegen mit der kürzesten erforderlichen Fahrzeit der optimale Weg ist, entsprechend den neuen Karteninformationen eine Entfernung berechnet, die dem Weg mit der kürzesten Fahrzeit zugeordnet ist, eine Gebühr für den neuen Weg mit der kürzesten Fahrzeit entsprechend den Dienstgebühreninformationen berechnet, Informationen erzeugt, welche Informationen über den neuen Weg mit der kürzesten Fahrzeit, neue Entfernungsinformationen und neue Gebühreninformationen einschließen, und die erzeugten Informationen über die erste Kommunikationssteuereinrichtung (32) zu dem Taxi (12) überträgt, indem Adressinformationen des tragbaren Telefonendgeräts (27) zu den erzeugten Informationen hinzugefügt werden.

13. Transportdienstsystem nach einem der Ansprüche 4 bis 8, wobei das Zentralgerät (16) aufweist:
einen Server (30) zum Austauschen von Informationen mit dem Taxi (12) und zum Ausführen einer vorgegebenen Verarbeitung und
eine mit dem Server verbundene Empfangseinrichtung (35) für Informationen vom intelligenten Transportsystem ITS zum Empfangen von durch das ITS angebotenen ITS-Informationen,
wobei der Server (30) aufweist:
eine erste Kommunikationssteuereinrichtung (32) zum Austauschen von Informationen mit jedem der mindestens einen Taxis (12),
eine erste Karteninformations-Speichereinrichtung (33) zum Speichern von Karteninformationen für jedes Gebiet,
eine Speichereinrichtung (31) für vorgegebene Gebühren zum Speichern von einer Taxigesellschaft zugeordneten Dienstgebühreninformationen und
eine erste Steuereinrichtung (34), die mit jeder von der ersten Kommunikationssteuereinrichtung (32), der ersten Karteninformations-Speichereinrichtung (33) und der Speichereinrichtung (31) für vorgegebene Gebühren verbunden ist, um jede von der ersten Kommunikationssteuereinrichtung (32), der ersten Karteninformations-Speichereinrichtung (33) und der Speichereinrichtung (31) für vorgegebene Gebühren zu steuern,
wobei die erste Steuereinrichtung (34) aus der ersten Karteninformations-Speichereinrichtung (33) Karteninformationen liest, die den Zielinformationen und den Informationen über den gegenwärtigen Ort entsprechen, welche von der ersten Kommunikationssteuereinrichtung (32) empfangen wurden, die ITS-Informationen von der ITS-Informationsempfangseinrichtung (35) erhält, die Dienstgebühreninformationen aus der Speichereinrichtung (31) für vorgegebene Gebühren liest, entsprechend den Karteninformationen mehrere Wege findet, die den gegenwärtigen Ort und das Ziel verbinden, entsprechend den Karteninformationen eine Entfernung vom gegenwärtigen Ort zum Ziel berechnet, die jedem der mehreren Wege zugeordnet ist, um zu bestimmen, dass ein Weg mit der kürzesten Entfernung unter den mehreren Wegen ein optimaler Weg mit der kürzesten Entfernung ist, entsprechend den ITS-Informationen eine erforderliche Fahrzeit für jeden der mehreren Wege berechnet, um zu bestimmen, dass ein Weg mit der kürzesten Fahrzeit unter den mehreren Wegen der optimale Weg mit der kürzesten erforderlichen Fahrzeit ist, entsprechend den Dienstgebühreninformationen eine Gebühr für jeden der mehreren Wege berechnet, um zu bestimmen, dass der Weg mit der geringsten Gebühr unter den mehreren Wegen ein optimaler Weg ist, Informationen erzeugt, welche Informationen, die den Weg mit der kürzesten Entfernung und seine zugeordnete Entfernung angeben, Informationen, die den Weg mit der kürzesten Fahrzeit und seine zugeordnete Zeit angeben, und Informationen, die den Weg mit der geringsten Gebühr und seine zugeordnete Gebühr angeben, einschließen, und die erzeugten Informationen über die erste Kommunikationssteuereinrichtung (32) zu dem Taxi (12) überträgt, indem Adressinformationen des tragbaren Telefonendgeräts (27) zu den erzeugten Informationen hinzugefügt werden.

14. Transportdienstsystem nach Anspruch 13, wobei, falls der Kunde des Taxis das Ziel zu einem neuen Ziel wechselt, wenn ein Dienst durch das Taxi (12) bereitgestellt wird,
die erste Kommunikationssteuereinrichtung (32) die Informationen über den neuen gegenwärtigen Ort und die neuen Zielinformationen empfängt und die empfangenen Informationen zu der ersten Steuereinrichtung (34) sendet und die erste Steuereinrichtung (34) neue ITS-Informationen von der ITS-Informationsempfangseinrichtung (35) erhält, aus der ersten Karteninformations-Speichereinrichtung (33) neue Karteninformationen liest, die den Informationen über den neuen gegenwärtigen Ort und den neuen Zielinformationen entsprechen, die Dienstgebühreninformationen aus der Speichereinrichtung (31) für vorgegebene Gebühren liest, entsprechend den neuen Karteninformationen mehrere Wege findet, die den neuen gegenwärtigen Ort und das neue Ziel verbinden, entsprechend den ITS-Informationen eine erforderliche Fahrzeit für jeden der mehreren neuen Wege berechnet, um zu bestimmen, dass ein Weg mit der kürzesten Fahrzeit unter den mehreren neuen Wegen mit der kürzesten erforderlichen Fahrzeit der optimale Weg ist, entsprechend den neuen Karteninformationen eine Entfernung vom neuen gegenwärtigen Ort zum neuen Ziel berechnet, die den mehreren neuen Wegen zugeordnet ist, um zu bestimmen, dass ein Weg mit der kürzesten Entfernung unter den mehreren Wegen einer der optimalen Wege mit der kürzesten Entfernung ist, entsprechend den Dienstgebühreninformationen eine Gebühr für jeden der mehreren Wege berechnet, um zu bestimmen, dass der Weg mit der geringsten Gebühr unter den mehreren Wegen einer der optimalen Wege mit der geringsten Gebühr ist, Informationen erzeugt, die Informationen über den Weg mit der kürzesten Fahrzeit, Informationen über den Weg mit der kürzesten Entfernung und Informationen über den Weg mit der geringsten Gebühr einschließen, und die erzeugten Informationen über die erste Kommunikationssteuereinrichtung (32) zu dem Taxi (12) überträgt, indem Adressinformationen des tragbaren Telefonendgeräts (27) zu den erzeugten Informationen hinzugefügt werden.

15. Transportdienstsystem nach Anspruch 12, 13 oder 14, wobei, falls der Kunde das Ziel zu einem neuen Ziel wechselt, wenn ein Dienst von dem Taxi (12) bereitgestellt wird, die erste Steuereinrichtung (34) eine erste Gebühr für einen Weg vom neuen gegenwärtigen Ort zum Ziel entsprechend den Karteninformationen, den ITS-Informationen und den Dienstgebühreninformationen berechnet, eine zweite Gebühr für einen Weg vom neuen gegenwärtigen Ort zum neuen Ziel entsprechend den neuen Karteninformationen, den neuen ITS-Informationen und den Dienstgebühreninformationen berechnet, die zweite Gebühr von der ersten Gebühr subtrahiert und die zweite Gebühr zum Subtraktionsergebnis addiert, um die neue Gebühr zu berechnen.

16. Transportdienstsystem nach Anspruch 15, wobei die erste Steuereinrichtung (34) eine Bilanz zwischen der ersten Gebühr und der neuen Gebühr berechnet und zum Taxi (12) Informationen über die Bilanz zusammen mit Informationen in Bezug auf die erste Gebühr durch die erste Kommunikationssteuereinrichtung (32) überträgt.

17. Transportdienstsystem nach einem der Ansprüche 11 bis 16, wobei das Taxi (12) das GPS-Endgerät (20) und die zweite Kommunikationssteuereinrichtung (22) aufweist, die mit dem GPS-Endgerät (20) verbunden sind, um Informationen mit dem Zentralgerät (16) auszutauschen, wobei das GPS-Endgerät (20) aufweist:
eine Eingabeeinrichtung (23) zum Eingeben eines vom Kunden spezifizierten Ziels,
eine zweite Karteninformations-Speichereinrichtung (25) zum Speichern von Karteninformationen für jedes Gebiet,
eine Bildanzeigeeinrichtung (24) zum Anzeigen eines Bilds und
eine zweite Steuereinrichtung (26), die mit der Eingabeeinrichtung (23), der zweiten Karteninformations-Speichereinrichtung (25) und der Bildanzeigeeinrichtung (24) verbunden ist, um jede der Einrichtungen zu steuern,
wobei die zweite Steuereinrichtung (26) die Informationen über den gegenwärtigen Ort anhand vom GPS-Satelliten (11) empfangener Funkwellen erfasst und die Informationen über den gegenwärtigen Ort und die Zielinformationen, die das von der Eingabeeinrichtung (23) eingegebene Ziel angeben, zur ersten Kommunikationssteuereinrichtung (32) sendet,
wobei die zweite Kommunikationssteuereinrichtung (22) die Informationen über den gegenwärtigen Ort und die Zielinformationen, die von der zweiten Steuereinrichtung (26) empfangen wurden, zum Zentralgerät (16) sendet und zur zweiten Steuereinrichtung (26) vom Zentralgerät (16) empfangene Informationen sendet,
und wobei die zweite Steuereinrichtung (26) aus der zweiten Karteninformations-Speichereinrichtung (25) Karteninformationen liest, die dem mindestens einen optimalen Weg entsprechen, der in Informationen enthalten ist, die von der zweiten Kommunikationssteuereinrichtung (22) empfangen werden, auf der Bildanzeigeeinrichtung (24) den mindestens einen optimalen Weg anzeigt, indem der Weg den Karteninformationen überlagert wird, und eine Entfernung vom gegenwärtigen Ort zum Ziel, die dem mindestens einen optimalen Weg zugeordnet ist, der in den vom Zentralgerät (16) übertragenen Informationen enthalten ist, eine erforderliche Fahrzeit, die dem mindestens einen optimalen Weg zugeordnet ist, und eine Gebühr für den mindestens einen optimalen Weg anzeigt.

18. Transportdienstsystem nach Anspruch 17, wobei in dem Taxi (12), falls der Kunde das Ziel zu einem neuen Ziel wechselt, wenn ein Dienst durch das Taxi (12) bereitgestellt wird, die zweite Kommunikationssteuereinrichtung (22) vom Zentralgerät (16) gesendete neue Informationen empfängt, die zweite Steuereinrichtung (26) aus der zweiten Karteninformations-Speichereinrichtung (25) neue Karteninformationen liest, die dem neuen optimalen Weg oder den jeweiligen neuen optimalen Wegen entsprechen, die in den neuen Informationen enthalten sind, und die Bildanzeigeeinrichtung (24) die neuen Karteninformationen, denen der neue optimale Weg oder die jeweiligen neuen optimalen Wege überlagert sind, eine Entfernung von dem neuen gegenwärtigen Ort zu dem neuen Ziel, die dem neuen optimalen Weg oder den jeweiligen neuen optimalen Wegen zugeordnet ist, welche in den neuen Informationen enthalten sind, eine erforderliche Fahrzeit, die dem neuen optimalen Weg oder den jeweiligen neuen optimalen Wegen zugeordnet ist, und eine Gebühr für den neuen optimalen Weg oder die jeweiligen neuen optimalen Wege anzeigt.

19. Transportdienstsystem nach einem der vorstehenden Ansprüche, wobei das Zentralgerät (16) für den mindestens einen optimalen Weg für jedes Taxi (12) erhaltene Informationen verwaltet.

20. Transportdienstsystem nach einem der Ansprüche 4 bis 19, wobei das Zentralgerät (16) für den neuen optimalen Weg für jedes Taxi (12) erhaltene Informationen verwaltet.

21. Transportdienstsystem nach einem der Ansprüche 1 bis 20, wobei das Zentralgerät (16) für jedes Taxi (12) die in Bezug auf die jeweiligen optimalen Wege erhaltenen Informationen, die für einen vom Kunden aus den optimalen Wegen ausgewählten optimalen Weg erhalten wurden, verwaltet.

22. Transportdienstsystem nach einem der Ansprüche 4 bis 21, wobei das Zentralgerät (16) für jedes Taxi (12) die in Bezug auf die jeweiligen neuen optimalen Wege erhaltenen Informationen, die für einen vom Kunden aus den neuen optimalen Wegen ausgewählten optimalen Weg erhalten wurden, verwaltet.

23. Verfahren zum Bereitstellen eines Transportdiensts in einem System, das mindestens einen Satelliten (11) des globalen Positionierungssystems GPS, ein GPS-Endgerät (20), ein Zentralgerät (16) und mindestens ein Taxi (12), an dem das GPS-Endgerät (20) angebracht ist, aufweist, wobei das Verfahren die folgenden Schritte aufweist:
Erfassen durch das GPS-Endgerät (20) seines gegenwärtigen Orts entsprechend vom GPS-Satelliten (11) übertragener Informationen zum Finden einer Position eines beweglichen Objekts,
Übertragen von Informationen über den gegenwärtigen Ort und von Zielinformationen, die ein von einem Kunden spezifiziertes Ziel angeben, von dem Taxi (12) und
Empfangen der Informationen über den gegenwärtigen Ort und der Zielinformationen, Erhalten von Informationen über den optimalen Weg für mindestens einen optimalen Weg für jeden von mehreren verschiedenen Gegenständen entsprechend den Informationen über den gegenwärtigen Ort und den Zielinformationen vom Zentralgerät (16) und Übertragen von Informationen einschließlich der Informationen über den optimalen Weg zum Taxi,
**dadurch gekennzeichnet, dass**
falls der Kunde das Ziel zu einem neuen Ziel wechselt, wenn ein Dienst durch das Taxi bereitgestellt wird, das Taxi (12) unter Verwendung des GPS-Endgeräts (20) Informationen über den gegenwärtigen Ort zur Zeit des Wechsels empfängt und zum Zentralgerät (16) die Informationen über den gegenwärtigen Ort und Zielinformationen, die das neue Ziel angeben, überträgt, wobei das Zentralgerät einen neuen optimalen Weg oder jeweilige neue optimale Wege für jeden der mehreren verschiedenen Gegenstände entsprechend den Informationen über den neuen gegenwärtigen Ort und den neuen Zielinformationen findet, um Informationen über einen optimalen Weg in Bezug auf einen neuen optimalen Weg zu erhalten, und Informationen einschließlich der Informationen über den optimalen Weg zum Taxi (12) überträgt.

24. Verfahren nach Anspruch 23 mit den weiteren Schritten: Berechnen der Gebühreninformationen für den mindestens einen optimalen Weg entsprechend den Informationen über den gegenwärtigen Ort und den Zielinformationen durch das Zentralgerät (16) und Übertragen von Informationen einschließlich der Gebühreninformationen zum Taxi.

25. Verfahren nach Anspruch 23 oder 24 mit den weiteren Schritten: Auswählen eines optimalen Wegs durch den Kunden, bevor ein Transportdienst durch das Taxi bereitgestellt wird, und Zahlen einer durch die Gebühreninformationen für den optimalen Weg oder den ausgewählten optimalen Weg angegebenen Gebühr, bevor ein Transportdienst durch das Taxi bereitgestellt wird.

26. Verfahren nach Anspruch 23, 24 oder 25 mit den weiteren Schritten: Erhalten von Entfernungsinformationen in Bezug auf eine Entfernung vom gegenwärtigen Ort zum Ziel, die dem mindestens einen optimalen Weg zugeordnet ist, entsprechend den Informationen über den gegenwärtigen Ort und den Zielinformationen vom Zentralgerät (16) und Übertragen der Informationen einschließlich der Entfernungsinformationen zum Taxi (12).

27. Verfahren nach Anspruch 23, 24, 25 oder 26 mit den weiteren Schritten: Erhalten von Fahrzeitinformationen zu einer erforderlichen Fahrzeit, die dem mindestens einen optimalen Weg zugeordnet ist, entsprechend den Informationen über den gegenwärtigen Ort und den Zielinformationen vom Zentralgerät (16) und Übertragen von Informationen einschließlich der Fahrzeitinformationen zum Taxi (12).

28. Verfahren nach Anspruch 27, wobei das Zentralgerät (16) weiter neue Gebühreninformationen über Gebühren für die jeweiligen neuen optimalen Wege entsprechend den Informationen über den neuen gegenwärtigen Ort und den neuen Zielinformationen erhält und die Informationen einschließlich der neuen Gebühreninformationen zum Taxi (12) überträgt.

29. Verfahren nach Anspruch 27 oder 28, wobei der Kunde einen optimalen Weg aus den jeweiligen neuen optimalen Wegen auswählt, bevor das Taxi (12) einen dem neuen Ziel zugeordneten Transportdienst bereitstellt.

30. Verfahren nach Anspruch 28 oder 29, wobei der Kunde für eine durch Gebühreninformationen über den neuen optimalen Weg bzw. den ausgewählten optimalen Weg angegebene Gebühr zahlt, bevor das Taxi einen dem neuen Ziel zugeordneten Transportdienst bereitstellt.

31. Verfahren nach einem der Ansprüche 27 bis 30, wobei das Zentralgerät (16) weiter Entfernungsinformationen über eine Entfernung vom neuen gegenwärtigen Ort zum neuen Ziel, die den jeweiligen neuen optimalen Wegen zugeordnet ist, entsprechend den Informationen über den neuen gegenwärtigen Ort und den neuen Zielinformationen erhält und die Informationen einschließlich der Entfernungsinformationen zum Taxi (12) überträgt.

32. Verfahren nach einem der Ansprüche 27 bis 31, wobei das Zentralgerät (16) weiter Fahrzeitinformationen über eine erforderliche Fahrzeit, die den jeweiligen neuen optimalen Wegen zugeordnet ist, entsprechend den Informationen über den neuen gegenwärtigen Ort und den neuen Zielinformationen erhält und die Informationen einschließlich der Fahrzeitinformationen zum Taxi (12) überträgt.

33. Verfahren nach einem der Ansprüche 23 bis 32, wobei die mehreren verschiedenen Gegenstände Gebühren für die jeweiligen optimalen Wege, eine Entfernung vom gegenwärtigen Ort zum Ziel, die den jeweiligen optimalen Wegen zugeordnet ist, und eine vom Taxi (12) benötigte erforderliche Fahrzeit, die den jeweiligen optimalen Wegen zugeordnet ist, einschließen.

34. Verfahren nach Anspruch 23, wobei das System weiter ein tragbares Telefonendgerät (27) aufweist, das an dem mindestens einen Taxi angebracht ist, wobei das Zentralgerät (16) eine Kommunikationssteuereinrichtung (32), eine Steuereinrichtung (34), eine Karteninformations-Speichereinheit (33), eine Informationsspeichereinheit (31) für vorgegebene Gebühren und einen ITS-Informationsempfänger (35) aufweist,
wobei das Verfahren weiter die folgenden Schritte aufweist:
Übertragen von Informationen über den gegenwärtigen Ort und von Zielinformationen, die ein von einem Kunden des Taxis (12) spezifiziertes Ziel angeben, von dem tragbaren Telefonendgerät (27),
Empfangen der Informationen über den gegenwärtigen Ort und der Zielinformationen von der Kommunikationssteuereinrichtung (32) und von der Steuereinrichtung (34) gesteuertes Lesen von Karteninformationen, die den Informationen über den gegenwärtigen Ort und den Zielinformationen entsprechen, aus der Karteninformations-Speichereinheit (33),
Finden mehrerer Wege, die den gegenwärtigen Ort und das Ziel verbinden, von der Steuereinrichtung (34) entsprechend den gelesenen Karteninformationen,
Empfangen von ITS-Informationen, die vom ITS bereitgestellt werden, durch den ITS-Informationsempfänger (35) und Erfassen der ITS-Informationen durch die Steuereinrichtung (34),
Berechnen einer erforderlichen Fahrzeit für jeden der mehreren Wege entsprechend den erfassten ITS-Informationen durch die Steuereinrichtung (34),
Bestimmen eines optimalen Wegs von den mehreren Wegen, der der Weg mit der kürzesten erforderlichen Fahrzeit ist, durch die Steuereinrichtung (34),
Berechnen eines Abstands zwischen dem gegenwärtigen Ort und dem Ziel, der dem Weg mit der kürzesten Fahrzeit zugeordnet ist, entsprechend den Karteninformationen durch die Steuereinrichtung (34),
Lesen von Dienstgebühreninformationen, die einer Taxigesellschaft zugeordnet sind, aus der Informationsspeichereinheit (31) für vorgegebene Gebühren unter der Steuerung durch die Steuereinrichtung (34),
Berechnen einer Gebühr für den Weg mit der kürzesten Fahrzeit entsprechend den gelesenen Dienstgebühreninformationen durch die Steuereinrichtung (34) und
Erzeugen von Informationen einschließlich Informationen über den Weg mit der kürzesten Fahrzeit, Entfernungsinformationen und Gebühreninformationen, durch die Steuereinrichtung (34) und Übertragen der Informationen von der Kommunikationssteuereinrichtung (32) zum Taxi (12) durch Hinzufügen von Adressinformationen des tragbaren Telefonendgeräts (27) zu den erzeugten Informationen.

35. Verfahren nach Anspruch 34, wobei der Kunde eine von den Gebühreninformationen angegebene Gebühr zahlt, bevor ein dem Ziel zugeordneter Transportdienst durch das Taxi (12) bereitgestellt wird.

36. Verfahren nach Anspruch 34, das, falls der Kunde das Ziel zu einem neuen Ziel wechselt, wenn ein Dienst durch das Taxi (12) bereitgestellt wird, die folgenden weiteren Schritte aufweist:
Lesen neuer Karteninformationen, die den Informationen über den neuen gegenwärtigen Ort und den neuen Zielinformationen entsprechen, aus der Karteninformations-Speichereinheit (33) durch die Steuereinrichtung (34),
Finden mehrerer neuer Wege, die den neuen gegenwärtigen Ort und das neue Ziel verbinden, entsprechend den neuen Karteninformationen durch die Steuereinrichtung (34),
Empfangen vom ITS bereitgestellter ITS-Informationen durch den ITS-Informationsempfänger (35) und Erfassen der ITS-Informationen durch die Steuereinrichtung (34),
Berechnen einer erforderlichen Fahrzeit für jeden der mehreren neuen Wege entsprechend den erfassten ITS-Informationen durch die Steuereinrichtung (34),
Bestimmen eines optimalen Wegs unter den mehreren neuen Wegen, der ein neuer Weg mit der kürzesten Fahrzeit ist, der die kürzeste erforderliche Fahrzeit aufweist, durch die Steuereinrichtung (34),
Berechnen einer neuen Entfernung zwischen dem neuen gegenwärtigen Ort und dem neuen Ziel, die dem neuen Weg mit der kürzesten Fahrzeit zugeordnet ist, entsprechend den neuen Karteninformationen durch die Steuereinrichtung (34),
Berechnen einer Gebühr für den neuen Weg mit der kürzesten Fahrzeit entsprechend den Dienstgebühreninformationen durch die Steuereinrichtung (34) und
Erzeugen von Informationen einschließlich Informationen über den Weg mit der kürzesten Fahrzeit, die den neuen Weg mit der kürzesten Fahrzeit angeben, Entfernungsinformationen, die die neue Entfernung angeben, und Gebühreninformationen, die die neue Gebühr angeben, durch die Steuereinrichtung (34) und Übertragen der Informationen von der Kommunikationssteuereinrichtung (32) zu dem Taxi (12) durch Hinzufügen von Adressinformationen des tragbaren Telefonendgeräts (27) zu den erzeugten Informationen.

37. Verfahren nach Anspruch 36, wobei der Kunde für eine durch die neuen Gebühreninformationen angegebene Gebühr zahlt, bevor ein dem neuen Ziel zugeordneter Transportdienst durch das Taxi (12) bereitgestellt wird.

38. Verfahren nach Anspruch 23, wobei das System weiter aufweist: ein tragbares Telefonendgerät (27), das an dem mindestens einen Taxi angebracht ist, wobei das Zentralgerät (16) eine Kommunikationssteuereinrichtung (32), eine Steuereinrichtung (34), eine Karteninformations-Speichereinheit (33), eine Informationsspeichereinheit (31) für vorgegebene Gebühren und einen ITS-Informationsempfänger (35) aufweist, wobei das Verfahren weiter die folgenden Schritte aufweist:
Übertragen von Informationen über den gegenwärtigen Ort und von Zielinformationen, die ein von einem Kunden des Taxis (12) spezifiziertes Ziel angeben, durch das tragbare Telefonendgerät (27),
Empfangen der Informationen über den gegenwärtigen Ort und der Zielinformationen durch die Kommunikationssteuereinrichtung (32) und durch die Steuereinrichtung (34) gesteuertes Lesen von Karteninformationen, die den Informationen über den gegenwärtigen Ort und den Zielinformationen entsprechen, aus der Karteninformations-Speichereinheit (33),
Finden mehrerer Wege, die den gegenwärtigen Ort und das Ziel verbinden, entsprechend den gelesenen Karteninformationen durch die Steuereinrichtung (34),
Berechnen einer Entfernung vom gegenwärtigen Ort zum Ziel für jeden der mehreren Wege entsprechend den Karteninformationen durch die Steuereinrichtung (34),
Bestimmen von einem optimalen Weg, der der kürzeste Weg mit der kürzesten Entfernung unter den mehreren Wegen ist, durch die Steuereinrichtung (34),
Empfangen durch das ITS bereitgestellter ITS-Informationen durch den ITS-Informationsempfänger (35) und Erfassen der ITS-Informationen durch die Steuereinrichtung,
Berechnen einer erforderlichen Fahrzeit für jeden der mehreren Wege entsprechend den erfassten ITS-Informationen durch die Steuereinrichtung (34),
Bestimmen eines optimalen Wegs, der der Weg mit der kürzesten Fahrzeit ist, der unter den mehreren Wegen die kürzeste erforderliche Fahrzeit aufweist, durch die Steuereinrichtung (34),
Lesen von Dienstgebühreninformationen, die einer Taxigesellschaft zugeordnet sind, unter der Steuerung durch die Steuereinrichtung (34) aus der Informationsspeichereinheit (31) für vorgegebene Gebühren,
Berechnen einer Gebühr für jeden der mehreren Wege entsprechend den Dienstgebühreninformationen durch die Steuereinrichtung (34),
Bestimmen eines optimalen Wegs, der der Weg mit der geringsten Gebühr ist, der unter den mehreren Wegen die geringste Gebühr aufweist, durch die Steuereinrichtung (34) und
Erzeugen von Informationen einschließlich Informationen, die den Weg mit der kürzesten Entfernung und seine Entfernung angeben, Informationen, die den Weg mit der kürzesten Fahrzeit und seine Zeit angeben, und Informationen, die den Weg mit der geringsten Gebühr und seine Gebühr angeben, durch die Steuereinrichtung (3) und Übertragen der Informationen zu dem Taxi (12) durch Hinzufügen von Adressinformationen des tragbaren Telefonendgeräts (27) zu den erzeugten Informationen.

39. Verfahren nach Anspruch 38, mit den weiteren Schritten: Auswählen von einem der optimalen Wege durch den Kunden, bevor ein dem Ziel zugeordneter Transportdienst durch das Taxi (12) bereitgestellt wird, und Zahlen einer durch die Gebühreninformationen für den ausgewählten optimalen Weg angegebenen Gebühr.

40. Verfahren nach Anspruch 39, welches, falls der Kunde das Ziel zu einem neuen Ziel wechselt, wenn ein Dienst durch das Taxi (12) bereitgestellt wird, die folgenden Schritte aufweist:
Übertragen von Informationen über den gegenwärtigen Ort zur Zeit des Wechsels und von Zielinformationen, die das neue Ziel angeben, durch das Taxi (12) vom tragbaren Telefonendgerät (27) zum Zentralgerät (16),
Empfangen der Informationen über den neuen gegenwärtigen Ort und der neuen Zielinformationen unter Verwendung der Kommunikationssteuereinrichtung (32) durch das Zentralgerät (16),
Lesen neuer Karteninformationen, die den Informationen über den neuen gegenwärtigen Ort und den neuen Zielinformationen entsprechen, aus der Karteninformations-Speichereinheit (33) durch die Steuereinrichtung (34),
Finden mehrerer neuer Wege, die den neuen gegenwärtigen Ort und das neue Ziel verbinden, entsprechend den neuen Karteninformationen durch die Steuereinrichtung (34),
Berechnen einer Entfernung vom neuen gegenwärtigen Ort zum neuen Ziel für jeden der optimalen Wege entsprechend den neuen Karteninformationen durch die Steuereinrichtung (34),
Bestimmen eines neuen Wegs als einen der optimalen Wege, der der kürzeste Weg mit der kürzesten Entfernung unter den mehreren Wegen ist, durch die Steuereinrichtung (34),
Erfassen neuer ITS-Informationen vom ITS-Informationsempfänger (35) durch die Steuereinrichtung (34),
Berechnen einer erforderlichen Fahrzeit für jeden der mehreren Wege entsprechend den erfassten ITS-Informationen durch die Steuereinrichtung (34),
Bestimmen eines neuen Wegs als einen optimalen Weg, der der Weg mit der kürzesten Fahrzeit unter den mehreren Wegen mit der kürzesten erforderlichen Fahrzeit ist, durch die Steuereinrichtung (34),
Berechnen einer Gebühr für jeden der mehreren Wege entsprechend den Dienstgebühreninformationen durch die Steuereinrichtung (34),
Bestimmen eines neuen Wegs als einen der optimalen Wege, der der Weg mit der geringsten Gebühr unter den mehreren Wegen mit der geringsten Gebühr ist, durch die Steuereinrichtung (34) und
Erzeugen von Informationen einschließlich Informationen über den neuen Weg mit der kürzesten Entfernung, Informationen über den neuen Weg mit der kürzesten Fahrzeit und Informationen über den neuen Weg mit der geringsten Gebühr durch die Steuereinrichtung (34) und Übertragen der Informationen zu dem Taxi (12) durch Hinzufügen von Adressinformationen des tragbaren Telefonendgeräts (27) zu den erzeugten Informationen.

41. Verfahren nach Anspruch 40 mit den weiteren Schritten: Auswählen von einem der neuen optimalen Wege durch den Kunden, bevor ein dem neuen Ziel zugeordneter Transportdienst durch das Taxi (12) bereitgestellt wird, und Zahlen einer durch die Gebühreninformationen für den ausgewählten optimalen Weg angegebenen Gebühr.

42. Verfahren nach Anspruch 38 oder 41, wobei, falls der Kunde das Ziel zu einem neuen Ziel wechselt, wenn ein Dienst durch das Taxi (12) bereitgestellt wird, die Steuereinrichtung (34) eine erste Gebühr für einen Weg von dem neuen gegenwärtigen Ort zu dem Ziel entsprechend den Karteninformationen, den ITS-Informationen und den Dienstgebühreninformationen berechnet, eine zweite Gebühr für einen Weg von dem neuen gegenwärtigen Ort zu dem neuen Ziel entsprechend den neuen Karteninformationen, den neuen ITS-Informationen und den Dienstgebühreninformationen berechnet, die zweite Gebühr von der ersten Gebühr subtrahiert und die zweite Gebühr zu dem Subtraktionsergebnis addiert, um die neue Gebühr zu berechnen.

43. Verfahren nach Anspruch 42, wobei die Steuereinrichtung (34) eine Bilanz zwischen der ersten Gebühr und der neuen Gebühr berechnet und die Informationen über die Bilanz zusammen mit Informationen in Bezug auf die erste Gebühr über die Kommunikationssteuereinrichtung (32) zum Taxi überträgt.

44. Verfahren nach Anspruch 34, wobei das Taxi (12) durch das tragbare Telefonendgerät (27) vom Zentralgerät (16) übertragene Informationen empfängt, aus der Karteninformations-Speichereinheit (25) des GPS-Endgeräts (20), von einer Steuereinrichtung (26) des GPS-Endgeräts (20) gesteuert, Karteninformationen ausliest, die dem in den empfangenen Informationen enthaltenen optimalen Weg entsprechen, auf einem Bildschirm (24) die Karteninformationen anzeigt, denen der optimale Weg überlagert ist, und eine Entfernung vom gegenwärtigen Ort zum Ziel, die dem optimalen Weg zugeordnet ist, eine erforderliche Fahrzeit des Taxis (12), die dem optimalen Weg zugeordnet ist, und eine Gebühr für den optimalen Weg, die in den vom Zentralgerät (16) gesendeten Informationen enthalten sind, anzeigt.

45. Verfahren nach Anspruch 38, wobei das Taxi (12) durch das tragbare Telefonendgerät (27) vom Zentralgerät (16) übertragene Informationen empfängt, aus der Karteninformations-Speichereinheit (25) des GPS-Endgeräts (20), von einer Steuereinrichtung (26) des GPS-Endgeräts (20) gesteuert, Karteninformationen ausliest, die dem in den empfangenen Informationen enthaltenen optimalen Weg entsprechen, auf einem Bildschirm (24) die Karteninformationen anzeigt, denen der optimale Weg überlagert ist, und eine Entfernung vom gegenwärtigen Ort zum Ziel, die den jeweiligen optimalen Wegen zugeordnet ist, eine erforderliche Fahrzeit des Taxis (12), die den jeweiligen optimalen Wegen zugeordnet ist, und Gebühren für die jeweiligen optimalen Wege, die in den vom Zentralgerät (16) gesendeten Informationen enthalten sind, anzeigt.

46. Verfahren nach Anspruch 34, wobei, falls der Kunde das Ziel zu einem neuen Ziel wechselt, wenn ein Dienst durch das Taxi (12) bereitgestellt wird, das Taxi (12) durch das tragbare Telefonendgerät (27) vom Zentralgerät (16) gesendete neue Informationen empfängt, aus der Karteninformations-Speichereinheit (25) des GPS-Endgeräts (20), von einer Steuereinrichtung (26) des GPS-Endgeräts (20) gesteuert, neue Karteninformationen ausliest, die dem in den vom Zentralgerät (16) empfangenen neuen Informationen enthaltenen neuen optimalen Weg entsprechen, auf einem Bildschirm (24) die neuen Karteninformationen anzeigt, denen der neue optimale Weg überlagert wird, und eine Entfernung vom neuen gegenwärtigen Ort zum neuen Ziel, die den neuen optimalen Weg zugeordnet ist, eine erforderliche Fahrzeit des Taxis (12), die dem neuen optimalen Weg zugeordnet ist, und eine Gebühr für den neuen optimalen Weg, die in den neuen Informationen enthalten sind, anzeigt.

47. Verfahren nach Anspruch 38, wobei, falls der Kunde das Ziel zu einem neuen Ziel wechselt, wenn ein Dienst durch das Taxi (12) bereitgestellt wird, das Taxi (12) durch das tragbare Telefonendgerät (27) vom Zentralgerät (16) gesendete neue Informationen empfängt, aus der Karteninformations-Speichereinheit (25) des GPS-Endgeräts (20), von einer Steuereinrichtung (26) des GPS-Endgeräts (20) gesteuert, neue Karteninformationen ausliest, die den in den vom Zentralgerät (16) empfangenen neuen Informationen enthaltenen jeweiligen neuen optimalen Wegen entsprechen, auf einem Bildschirm (24) die neuen Karteninformationen anzeigt, denen die jeweiligen neuen optimalen Wege überlagert werden, und eine Entfernung vom neuen gegenwärtigen Ort zum neuen Ziel, die den jeweiligen neuen optimalen Wegen zugeordnet ist, eine erforderliche Fahrzeit des Taxis (12), die den jeweiligen neuen optimalen Wegen zugeordnet ist, und Gebühren für die jeweiligen neuen optimalen Wege, die in den neuen Informationen enthalten sind, anzeigt.

48. Verfahren nach Anspruch 46 oder 47, wobei das Zentralgerät (16) für den neuen optimalen Weg für jedes Taxi (12) erhaltene Informationen verwaltet.

49. Verfahren nach Anspruch 46, wobei das Zentralgerät (16) für jedes Taxi (12) die in Bezug auf die jeweiligen optimalen Wege erhaltenen Informationen, die für einen vom Kunden aus den optimalen Wegen ausgewählten optimalen Weg erhalten wurden, verwaltet.

50. Verfahren nach Anspruch 47, wobei das Zentralgerät (16) für jedes Taxi (12) die in Bezug auf die jeweiligen neuen optimalen Wege erhaltenen Informationen, die für einen vom Kunden aus den neuen optimalen Wegen ausgewählten optimalen Weg erhalten wurden, verwaltet.

51. Verfahren nach Anspruch 23, welches weiter die folgenden Schritte aufweist:
Präsentieren einer Gebühr für einen Transportdienst entsprechend einem von einem Kunden spezifizierten Ziel, wenn der Kunde in das Taxi (12) einsteigt, durch einen Taxifahrer für den Kunden und
Zahlen der Gebühr durch den Kunden, bevor der Transportdienst durch das Taxi (12) bereitgestellt wird.

52. Verfahren nach Anspruch 51, wobei die Gebühr entsprechend einem gegenwärtigen Ort, an dem der Kunde in das Taxi (12) einsteigt, und dem Ziel berechnet wird.

53. Verfahren nach Anspruch 52, welches, falls ein Wechsel des Ziels zu einem neuen Ziel vorgenommen wird, während der Transportdienst durch das Taxi (12) bereitgestellt wird, die folgenden weiteren Schritte aufweist:
Berechnen einer neuen Gebühr entsprechend einem gegenwärtigen Ort zur Zeit des Wechsels und dem neuen Ziel, wobei die neue Gebühr dem Kunden vom Fahrer präsentiert wird, und
Zahlen der neuen Gebühr durch den Kunden, bevor der dem neuen Ziel zugeordnete Transportdienst durch das Taxi (12) bereitgestellt wird.

54. Verfahren nach Anspruch 53, wobei die Gebühr für einen optimalen Weg zwischen dem gegenwärtigen Ort und dem Ziel berechnet wird.

55. Verfahren nach Anspruch 23, welches weiter die folgenden Schritte aufweist:
Finden der jeweiligen optimalen Wege zwischen einem von einem Kunden spezifizierten Ziel, wenn der Kunde in das Taxi (12) einsteigt, und dem gegenwärtigen Ort zur Zeit des Wechsels für die jeweiligen verschiedenen Gegenstände,
Berechnen von Gebühren für den durch das Taxi (12) bereitgestellten Transportdienst für die jeweiligen optimalen Wege,
Präsentieren von jeder der für die jeweiligen optimalen Wege berechneten Gebühren durch einen Taxifahrer für einen Kunden und
Auswählen von einem der optimalen Wege durch den Kunden und Zahlen einer Gebühr für den ausgewählten optimalen Weg durch den Kunden, bevor der Transportdienst durch das Taxi (12) bereitgestellt wird.

56. Verfahren nach Anspruch 55, welches, falls ein Wechsel des Ziels zu einem neuen Ziel vorgenommen wird, während der Transportdienst durch das Taxi (12) bereitgestellt wird, die folgenden weiteren Schritte aufweist:
Finden neuer optimaler Wege zwischen einem neuen Ziel zur Zeit des Wechsels und dem neuen Ziel für die jeweiligen verschiedenen Gegenstände,
Berechnen neuer Gebühren für den durch das Taxi (12) bereitgestellten Transportdienst für jeden der neuen optimalen Wege,
Präsentieren von jeder der für jeden der neuen optimalen Wege berechneten neuen Gebühren durch den Taxifahrer für den Kunden und
Auswählen von einem der neuen optimalen Wege durch den Kunden und Zahlen einer Gebühr für den ausgewählten optimalen Weg durch den Kunden, bevor der dem neuen Ziel zugeordnete Transportdienst durch das Taxi (12) bereitgestellt wird.

## Revendications

1. Système de service de transport, comprenant :
au moins un satellite de système de positionnement global, GPS, (11) pour transmettre des informations utilisées pour détecter une position d'un objet en déplacement ;
au moins un taxi (12) ayant un terminal GPS (20) qui reçoit lesdites informations en provenance dudit satellite GPS (11) et qui détecte une position actuelle dudit taxi (12) sur la base desdites informations, pour transmettre des informations de position actuelle concernant ladite position actuelle détectée et des informations de destination indiquant une destination spécifiée par un client ; et
un équipement central (16) pour recevoir lesdites informations de position actuelle et informations de destination, pour trouver au moins un itinéraire optimal pour chacun de plusieurs éléments différents afin d'obtenir des informations d'itinéraire optimal conformément auxdites informations de position actuelle et informations de destination, et pour transmettre des informations incluant lesdites informations d'itinéraire optimal au dit taxi (12),
si le client du taxi change la destination pour une nouvelle destination, **caractérisé en ce que**, lorsqu'un service est fourni par ledit taxi (12),
ledit taxi détecte grâce au dit terminal GPS (20) d'informations de nouvelle position actuelle à l'instant dudit changement, et transmet au dit équipement central (16) lesdites informations de nouvelle position actuelle et nouvelles informations de destination indiquant ladite nouvelle destination, et
ledit équipement central (16), trouve conformément auxdites informations de nouvelle position actuelle et nouvelles informations de destination, un ou plusieurs nouveaux itinéraires optimaux respectifs pour chacun desdits plusieurs éléments différents afin d'obtenir de nouveaux éléments d'informations d'itinéraire optimal, et transmet des informations incluant chacun desdits nouveaux éléments d'informations d'itinéraire optimal au dit taxi (12).

2. Système de service de transport selon la revendication 1, dans lequel ledit équipement central (16) calcule, conformément auxdites informations de position actuelle et informations de destination, un prix pour chacun dudit au moins un itinéraire optimal afin d'obtenir des informations de prix, et transmet des informations incluant lesdites informations de prix au dit taxi (12).

3. Système de service de transport selon la revendication 1 ou 2, dans lequel ledit équipement central (16) calcule, conformément auxdites informations de position actuelle et informations de destination, une distance de ladite position actuelle à ladite destination qui est associée à chacun dudit au moins un itinéraire optimal afin d'obtenir des informations de distance, et transmet des informations incluant lesdites informations de distance au dit taxi (12).

4. Système de service de transport selon la revendication 1, 2 ou 3, dans lequel ledit équipement central (16) calcule conformément auxdites informations de position actuelle et informations de destination une durée de conduite requise, qui est associée à chacun dudit au moins un itinéraire optimal afin d'obtenir des informations de durée de conduite, et transmet des informations incluant lesdites informations de durée de conduite au dit taxi (12).

5. Système de service de transport selon la revendication 1, 2, 3 ou 4, dans lequel ledit équipement central (16) calcule, conformément auxdites informations de nouvelle position actuelle et nouvelles informations de destination, un prix pour chacun desdits nouveaux itinéraires optimaux respectifs afin d'obtenir des informations de prix, et transmet des informations incluant lesdites informations de prix au dit taxi (12).

6. Système de service de transport selon l'une quelconque des revendications 1 à 5, dans lequel ledit équipement central (16) calcule, conformément auxdites informations de nouvelle position actuelle et nouvelles informations de destination, une distance de ladite nouvelle position actuelle à ladite nouvelle destination associée à chacun dudit nouvel itinéraire optimal ou desdits nouveaux itinéraires optimaux respectifs afin d'obtenir des informations de distance, et transmet des informations incluant lesdites informations de distance au dit taxi (12).

7. Système de service de transport selon l'une quelconque des revendications 1 à 6, dans lequel ledit équipement central (16) calcule, conformément auxdites informations de nouvelle position actuelle et nouvelles informations de destination, une durée de conduite requise par ledit taxi (12), qui est associée à chacun dudit nouvel itinéraire optimal ou desdits nouveaux itinéraires optimaux respectifs afin d'obtenir des informations de durée de conduite, et transmet des informations incluant lesdites informations de durée de conduite au dit taxi (12).

8. Système de service de transport selon l'une quelconque des revendications 1 à 7, dans lequel lesdits plusieurs éléments différents incluent des prix pour lesdits itinéraires optimaux respectifs, une distance de ladite position actuelle à ladite destination associée auxdits itinéraires optimaux respectifs, et une durée de conduite requise qui est requise par ledit taxi (12), qui est associée auxdits itinéraires optimaux respectifs.

9. Système de service de transport selon l'une quelconque des revendications 4 à 8, dans lequel ledit équipement central (16) comprend :
un serveur (30) pour communiquer des informations avec ledit taxi (12) et exécuter un traitement prédéterminé; et
des moyens de réception d'informations de système de transport intelligent, ITS, (35) connectés au dit serveur, pour recevoir des informations ITS offertes par ledit système ITS,
ledit serveur (30) comprenant ;
des premiers moyens de commande de communication (32) pour communiquer des informations avec chacun dudit au moins un taxi (12) ;
des premiers moyens de mémorisation d'informations de carte (33) pour mémoriser des informations de carte pour chaque zone ;
des moyens de mémorisation de prix pré-fixé (31) pour mémoriser des informations de prix de service associées à une compagnie de taxis ; et
des premiers moyens de commande (34) connectés à chacun desdits premiers moyens de commande de communication (32), desdits premiers moyens de mémorisation d'informations de carte (33), et desdits moyens de mémorisation de prix pré-fixé (31), pour commander chacun desdits moyens,
dans lequel lesdits premiers moyens de commande (34) lisent, à partir desdits premiers moyens de mémorisation d'informations de carte (33), des informations de carte correspondant auxdites informations de destination et auxdites informations de position actuelle reçues par lesdits premiers moyens de commande de communication, obtiennent lesdites informations ITS en provenance desdits moyens de réception d'informations ITS (35), lisent lesdites informations de prix de service en provenance desdits moyens de mémorisation de prix pré-fixé (31), et calculent conformément auxdites informations de carte, auxdites informations ITS, et auxdites informations de prix de service, ledit au moins un itinéraire optimal, une distance de ladite position actuelle à ladite destination associée au dit au moins un itinéraire optimal, une durée de conduite requise associée au dit au moins un itinéraire optimal, et un prix pour ledit au moins un itinéraire optimal.

10. Système de service de transport selon la revendication 9, dans lequel, si le client change la destination pour une nouvelle destination lorsqu'un service est fourni par ledit taxi (12),
lesdits premiers moyens de commande de communication (32) reçoivent lesdites informations de nouvelle position actuelle et nouvelles informations de destination, et lesdits premiers moyens de commande (34) obtiennent de nouvelles informations ITS en provenance desdits moyens de réception d'informations ITS (35), lisent, à partir desdits premiers moyens de mémorisation d'informations de carte (33) de nouvelles informations de carte correspondant auxdites informations de nouvelle position actuelle et auxdites nouvelles informations de destination, et trouvent conformément auxdites nouvelles informations ITS, auxdites nouvelles informations de carte et auxdites nouvelles informations de prix de service, un nouvel itinéraire optimal ou de nouveaux itinéraires optimaux respectifs, une distance de ladite nouvelle position actuelle à ladite nouvelle destination désignée par ledit nouvel itinéraire optimal ou lesdits nouveaux itinéraires optimaux respectifs, une durée de conduite requise qui est requise par ledit taxi (12) associée au dit nouvel itinéraire optimal ou auxdits nouveaux itinéraires optimaux respectifs, et un prix pour ledit nouvel itinéraire optimal ou lesdits nouveaux itinéraires optimaux respectifs.

11. Système de service de transport selon l'une quelconque des revendications 4 à 8, dans lequel ledit équipement central (16) comprend :
un serveur (30) pour communiquer des informations avec ledit taxi (12) et exécuter un traitement prédéterminé; et
des moyens de réception d'informations de système de transport intelligent, ITS, (35) connectés au dit serveur, pour recevoir des informations ITS offertes ledit système ITS,
ledit serveur (30) comprenant ;
des premiers moyens de commande de communication (32) pour communiquer des informations avec chacun dudit au moins un taxi (12) ;
des premiers moyens de mémorisation d'informations de carte (33) pour mémoriser des informations de carte pour chaque zone ;
des moyens de mémorisation de prix pré-fixé (31) pour mémoriser des informations de prix de service associées à une compagnie de taxis ; et
des premiers moyens de commande (34) connectés à chacun desdits premiers moyens de commande de communication (32), desdits premiers moyens de mémorisation d'informations de carte (33), et desdits moyens de mémorisation de prix pré-fixé (31), pour commander chacun desdits premiers moyens de commande de communication (32), desdits premiers moyens de mémorisation d'informations de carte (33), et desdits moyens de mémorisation de prix pré-fixé (31),
dans lequel lesdits premiers moyens de commande (34) lisent, à partir desdits premiers moyens de mémorisation d'informations de carte (33), des informations de carte correspondant auxdites informations de destination et auxdites informations de position actuelle reçues par lesdits premiers moyens de commande de communication, obtiennent lesdites informations ITS en provenance desdits moyens de réception d'informations ITS (35), lisent lesdites informations de prix de service en provenance desdits moyens de mémorisation de prix pré-fixé (31), trouvent, conformément auxdites informations de carte, une pluralité d'itinéraires connectant lesdites position actuelle et destination, calculent, conformément auxdites informations ITS, une durée de conduite requise pour chacun de ladite pluralité d'itinéraires afin de déterminer qu'un itinéraire de durée la plus courte parmi lesdits plusieurs itinéraires ayant la durée de conduite requise la plus courte est ledit itinéraire optimal, calculent, conformément auxdites informations de carte, une distance de ladite position actuelle à ladite destination associée au dit itinéraire de durée la plus courte, calculent un prix pour ledit itinéraire de durée la plus courte conformément auxdites informations de prix de service, génèrent des informations incluant des informations d'itinéraire de durée la plus courte indicatives dudit itinéraire de durée la plus courte, des informations de distance indicatives de ladite distance, et des informations de prix indicatives dudit prix, et transmettent lesdites informations générées, à travers lesdits premiers moyens de commande de communication (32) au dit taxi (12), en ajoutant des informations d'adresse dudit terminal téléphonique portable (27) auxdites informations générées.

12. Système de service de transport selon la revendication 11, dans lequel, si le client change la destination pour une nouvelle destination lorsqu'un service est fourni par ledit taxi (12),
lesdits premiers moyens de commande de communication (32) reçoivent lesdites informations de nouvelle position actuelle et nouvelles informations de destination, et transmettent lesdites informations reçues auxdits premiers moyens de commande (34), et lesdits premiers moyens de commande (34) obtiennent de nouvelles informations ITS en provenance desdits moyens de réception d'informations ITS (35), lisent, à partir desdits premiers moyens de mémorisation d'informations de carte (33), de nouvelles informations de carte correspondant auxdites informations de nouvelle position actuelle et auxdites nouvelles informations de destination, trouvent, conformément auxdites nouvelles informations de carte, une pluralité d'itinéraires connectant lesdites nouvelle position actuelle et nouvelle destination, calculent, conformément auxdites informations ITS, une durée de conduite requise pour chacun de ladite nouvelle pluralité d'itinéraires afin de déterminer qu'un nouvel itinéraire de durée la plus courte parmi lesdits nouveaux plusieurs itinéraires ayant la durée de conduite requise la plus courte est ledit itinéraire optimal, calculent, conformément auxdites nouvelles informations de carte, une distance associée au dit itinéraire de durée la plus courte, calculent un prix pour ledit nouvel itinéraire de durée la plus courte, conformément auxdites informations de prix de service, génèrent des informations incluant des nouvelles informations d'itinéraire de durée la plus courte indicatives dudit nouvel itinéraire de durée la plus courte, des nouvelles informations de distance indicatives de ladite distance, et des nouvelles informations de prix indicatives dudit prix, et transmettent lesdites informations générées, à travers lesdits premiers moyens de commande de communication (32), au dit taxi (12), en ajoutant des informations d'adresse dudit terminal téléphonique portable (27) auxdites informations générées.

13. Système de service de transport selon l'une quelconque des revendications 4 à 8, dans lequel ledit équipement central (16) comprend :
un serveur (30) pour communiquer des informations avec ledit taxi (12) et exécuter un traitement prédéterminé; et
des moyens de réception d'informations de système de transport intelligent, ITS, (35) connectés au dit serveur, pour recevoir des informations ITS offertes par ledit système ITS,
ledit serveur (30) comprenant :
des premiers moyens de commande de communication (32) pour communiquer des informations avec chacun dudit au moins un taxi (12) ;
des premiers moyens de mémorisation d'informations de carte (33) pour mémoriser des informations de carte pour chaque zone ;
des moyens de mémorisation de prix pré-fixé (31) pour mémoriser des informations de prix de service associées à une compagnie de taxis ; et
des premiers moyens de commande (34) connectés à chacun desdits premiers moyens de commande de communication (32), desdits premiers moyens de mémorisation d'informations de carte (33), et desdits moyens de mémorisation de prix pré-fixé (31), pour commander chacun desdits premiers moyens de commande de communication (32), desdits premiers moyens de mémorisation d'informations de carte (33), et desdits moyens de mémorisation de prix pré-fixé (31),
dans lequel lesdits premiers moyens de commande (34) lisent, à partir desdits premiers moyens de mémorisation d'informations de carte (33), des informations de carte correspondant auxdites informations de destination et auxdites informations de position actuelle reçues par lesdits premiers moyens de commande de communication (32), obtiennent lesdites informations ITS en provenance desdits moyens de réception d'informations ITS (35), lisent lesdites informations de prix de service en provenance desdits moyens de mémorisation de prix pré-fixé (31), trouvent, conformément auxdites informations de carte, une pluralité d'itinéraires connectant lesdites position actuelle et destination, calculent, conformément auxdites informations de carte, une distance de ladite position actuelle à ladite destination associée à chacun de ladite pluralité d'itinéraires afin de déterminer qu'un itinéraire de distance la plus courte parmi ladite pluralité d'itinéraires est un itinéraire optimal ayant la distance la plus courte, calculent, conformément auxdites informations ITS, une durée de conduite requise pour chacun de ladite pluralité d'itinéraires afin de déterminer qu'un itinéraire de durée la plus courte parmi ladite pluralité d'itinéraires est un itinéraire optimal ayant la durée de conduite requise la plus courte, calculent, conformément auxdites informations de prix de service, un prix pour chacun de ladite pluralité d'itinéraires afin de déterminer qu'un itinéraire de prix le plus bas parmi ladite pluralité d'itinéraires est un itinéraire optimal, génèrent des informations incluant des informations indiquant ledit itinéraire de distance la plus courte et sa distance associée, des informations indiquant ledit itinéraire de durée la plus courte et sa durée associée, et des informations indiquant l'itinéraire de prix le plus bas et son prix associé, et transmettent lesdites informations générées, à travers lesdits premiers moyens de commande de communication (32), au dit taxi (12), en ajoutant des informations d'adresse dudit terminal téléphonique portable (27) auxdites informations générées.

14. Système de service de transport selon la revendication 13, dans lequel, si le client change la destination pour une nouvelle destination lorsqu'un service est fourni par ledit taxi (12),
lesdits premiers moyens de commande de communication (32) reçoivent lesdites informations de nouvelle position actuelle et nouvelles informations de destination, et transmettent lesdites informations reçues auxdits premiers moyens de commande (34), et lesdits premiers moyens de commande (34) obtiennent de nouvelles informations ITS en provenance desdits moyens de réception d'informations ITS (35), lisent à partir desdits premiers moyens de mémorisation d'informations de carte (33) des nouvelles informations de carte correspondant auxdites informations de nouvelle position actuelle et auxdites nouvelles informations de destination, lisent lesdites informations de prix de service à partir desdits moyens de mémorisation de prix pré-fixé (31), trouvent, conformément auxdites nouvelles informations de carte, une pluralité d'itinéraires connectant lesdites nouvelle position actuelle et nouvelle destination, calculent, conformément auxdites informations ITS, une durée de conduite requise pour chacun de ladite nouvelle pluralité d'itinéraires afin de déterminer qu'un itinéraire de durée la plus courte parmi lesdits nouveaux plusieurs itinéraires ayant la durée de conduite requise la plus courte est ledit itinéraire optimal, calculent, conformément auxdites nouvelles informations de carte, une distance de ladite nouvelle position actuelle à ladite nouvelle destination, associée auxdits nouveaux plusieurs itinéraires afin de déterminer qu'un itinéraire de distance la plus courte parmi ladite pluralité d'itinéraires est un desdits itinéraires optimaux ayant la distance la plus courte, calculent conformément auxdites informations de prix de service un prix pour chacun desdits plusieurs itinéraires afin de déterminer qu'un itinéraire de prix le plus bas parmi ladite pluralité d'itinéraires est un desdits itinéraires optimaux ayant le prix le plus bas, génèrent des informations incluant des informations d'itinéraire de durée la plus courte indicatives dudit itinéraire de durée la plus courte, des informations d'itinéraire de distance la plus courte indicatives dudit itinéraire de distance la plus courte, et des informations d'itinéraire de prix le plus bas indicatives dudit itinéraire de prix le plus bas, et transmettent lesdites informations générées, à travers lesdits premiers moyens de commande de communication (32), au dit taxi (12) en ajoutant des informations d'adresse dudit terminal téléphonique portable (27) auxdites informations générées.

15. Système de service de transport selon la revendication 12, 13 ou 14, dans lequel, si le client change la destination pour une nouvelle destination lorsqu'un service est fourni par ledit taxi (12), lesdits premiers moyens de commande (34) calculent un premier prix pour un itinéraire de ladite nouvelle position actuelle à ladite destination conformément auxdites informations de carte, auxdites informations ITS, et auxdites informations de prix de service, calculent un second prix pour un itinéraire de ladite nouvelle position actuelle à ladite nouvelle destination conformément auxdites nouvelles informations de carte, auxdites nouvelles informations ITS, et auxdites informations de prix de service, soustraient ledit second prix dudit premier prix, et ajoutent ledit second prix au dit résultat de soustraction afin de calculer ledit nouveau prix.

16. Système de service de transport selon la revendication 15, dans lequel lesdits premiers moyens de commande (34) calculent un solde entre ledit premier prix et ledit nouveau prix, et transmettent au dit taxi (12) des informations relatives au dit solde conjointement avec des informations concernant ledit premier prix, à travers lesdits premiers moyens de commande de communication (32).

17. Système de service de transport selon l'une quelconque des revendications 11 à 16, dans lequel ledit taxi (12) possède ledit terminal GPS (20) et des seconds moyens de commande de communication (22) connectés au dit terminal GPS (20), pour communiquer des informations avec ledit équipement central (16), ledit terminal GPS (20) comprenant ;
des moyens d'entrée (23) pour entrer une destination spécifiée par le client,
des seconds moyens de mémorisation d'informations de carte (25) pour mémoriser des informations de carte pour chaque zone,
des moyens d'affichage d'image (24) pour afficher une image, et
des seconds moyens de commande (26) connectés auxdits moyens d'entrée (23), auxdits seconds moyens de mémorisation d'informations de carte (25), et auxdits moyens d'affichage d'image (24), pour commander chacun desdits moyens,
lesdits seconds moyens de commande (26) détectant lesdites informations de position actuelle à partir des ondes radio reçues en provenance dudit satellite GPS (11), et transmettant auxdits premiers moyens de commande de communication (32) lesdites informations de position actuelle et informations de destination indicatives de ladite destination entrée à partir desdits moyens d'entrée (23),
lesdits seconds moyens de commande de communication (22) transmettant au dit équipement central (16) lesdites informations de position actuelle et lesdites informations de destination reçues en provenance desdits seconds moyens de commande (26), et transmettant auxdits seconds moyens de commande (26) des informations reçues en provenance dudit équipement central (16), et lesdits seconds moyens de commande (26) lisant à partir desdits seconds moyens de mémorisation d'informations de carte (25) des informations de carte correspondant au dit au moins un itinéraire optimal inclus dans les informations reçues en provenance desdits seconds moyens de commande de communication (22), et affichant sur lesdits moyens d'affichage d'image (24) ledit au moins un itinéraire optimal en superposant l'itinéraire sur lesdites informations de carte, et affichant une distance de ladite position actuelle à ladite destination, associée au dit au moins un itinéraire optimal inclus dans lesdites informations transmises à partir dudit équipement central (16), une durée de conduite requise, associée au dit au moins un itinéraire optimal, et un prix pour ledit au moins un itinéraire optimal.

18. Système de service de transport selon la revendication 17, dans lequel, dans ledit taxi (12), si le client change la destination pour une nouvelle destination lorsqu'un service est fourni par ledit taxi (12), lesdits seconds moyens de commande de communication (22) reçoivent de nouvelles informations envoyées par ledit équipement central (16), lesdits seconds moyens de commande (26) lisent à partir desdits seconds moyens de mémorisation d'informations de carte (25) des nouvelles informations de carte correspondant au dit nouvel itinéraire optimal ou auxdits nouveaux itinéraires optimaux respectifs inclus dans lesdites nouvelles informations, et lesdits moyens d'affichage d'image (24) affichent lesdites nouvelles informations de carte sur lesquelles ledit nouvel itinéraire optimal ou lesdits nouveaux itinéraires optimaux respectifs sont superposés, et une distance de ladite nouvelle position actuelle à ladite nouvelle destination, associée au dit nouvel itinéraire optimal ou auxdits nouveaux itinéraires optimaux respectifs inclus dans lesdites nouvelles informations, une durée de conduite requise, associée au dit nouvel itinéraire optimal ou auxdits nouveaux itinéraires optimaux respectifs, et un prix pour ledit nouvel itinéraire optimal ou lesdits nouveaux itinéraires optimaux respectifs.

19. Système de service de transport selon l'une quelconque des revendications précédentes, dans lequel ledit équipement central (16) administre les informations obtenues pour ledit au moins un itinéraire optimal pour chaque taxi (12).

20. Système de service de transport selon l'une quelconque des revendications 4 à 19, dans lequel ledit équipement central (16) administre les informations obtenues pour ledit nouvel itinéraire optimal pour chaque taxi (12).

21. Système de service de transport selon l'une quelconque des revendications 1 à 20, dans lequel, pour chaque taxi (12), ledit équipement central (16) administre lesdites informations obtenues par rapport auxdits itinéraires optimaux respectifs, qui ont été obtenus pour un itinéraire optimal sélectionné par le client parmi lesdits itinéraires optimaux.

22. Système de service de transport selon l'une quelconque des revendications 4 à 21, dans lequel, pour chaque taxi (12), ledit équipement central (16) administre lesdites informations obtenues par rapport auxdits nouveaux itinéraires optimaux respectifs, qui ont été obtenues pour un itinéraire optimal sélectionné par le client parmi lesdits nouveaux itinéraires optimaux.

23. Procédé pour fournir un service de transport dans un système qui comprend au moins un satellite de système de positionnement global, GPS, (11), un terminal GPS (20), un équipement central (16), et au moins un taxi (12) sur lequel ledit terminal GPS (20) est monté, ledit procédé comprenant les étapes consistant :
à détecter par ledit terminal GPS (20) sa position actuelle conformément aux informations pour trouver une position d'un objet en déplacement transmises à partir dudit satellite GPS (11) ;
à transmettre à partir dudit taxi (12) des informations de position actuelle relatives à ladite position actuelle, et des informations de destination indiquant une destination spécifiée par un client ; et
à recevoir par ledit équipement central (16) lesdites informations de position actuelle et lesdites informations de destination, à obtenir des informations d'itinéraire optimal relatives à au moins un itinéraire optimal pour chacun de plusieurs éléments différents conformément auxdites informations de position actuelle et informations de destination, et à transmettre des informations incluant lesdites informations d'itinéraire optimal au dit taxi, **caractérisé en ce que**
si le client change la destination pour une nouvelle destination, lorsqu'un service est fourni par ledit taxi, ledit taxi (12) obtient, en utilisant ledit terminal GPS (20), des informations de position actuelle relatives à une position actuelle à l'instant dudit changement, et transmet au dit équipement central (16) lesdites informations de position actuelle et informations de destination indiquant ladite nouvelle destination, et dans lequel ledit équipement central trouve un nouvel itinéraire optimal ou de nouveaux itinéraires optimaux respectifs pour chacun desdits plusieurs éléments différents conformément auxdites informations de nouvelle position actuelle et auxdites nouvelles informations de destination pour obtenir des informations d'itinéraire optimal relatives à un nouvel itinéraire optimal, et transmet les informations incluant lesdites informations d'itinéraire optimal au dit taxi (12).

24. Procédé selon la revendication 23, incluant, en outre, les étapes consistant à calculer par ledit équipement central (16) des informations de prix relatives à des prix pour ledit au moins un itinéraire optimal conformément auxdites informations de position actuelle et informations de destination, et à transmettre les informations incluant lesdites informations de prix au dit taxi.

25. Procédé selon la revendication 23 ou 24, incluant, en outre, les étapes consistant à sélectionner par le client un des itinéraires optimaux avant qu'un service de transport ne soit fourni par ledit taxi, et à payer un prix indiqué par lesdites informations de prix relatives au dit itinéraire optimal ou au dit itinéraire optimal sélectionné, avant qu'un service de transport ne soit fourni par ledit taxi.

26. Procédé selon la revendication 23, 24 ou 25, incluant, en outre, les étapes consistant à obtenir par ledit équipement central (16) des informations de distance relatives à une distance de ladite position actuelle à ladite destination, associée au dit au moins un itinéraire optimal conformément auxdites informations de position actuelle et informations de destination, et à transmettre lesdites informations incluant lesdites informations de distance au dit taxi (12).

27. Procédé selon la revendication 23, 24, 25 ou 26, incluant, en outre, les étapes consistant à obtenir par ledit équipement central (16) des informations de durée de conduite relatives à une durée de conduite requise, associée au dit au moins un itinéraire optimal conformément auxdites informations de position actuelle et informations de destination, et à transmettre les informations incluant les informations de durée de conduite au dit taxi (12).

28. Procédé selon la revendication 27, dans lequel ledit équipement central (16) obtient, en outre, des nouvelles informations de prix relatives à des prix pour lesdits nouveaux itinéraires optimaux respectifs conformément auxdites informations de nouvelle position actuelle et nouvelles informations de destination, et à transmettre lesdites informations incluant lesdites nouvelles informations de prix au dit taxi (12).

29. Procédé selon la revendication 27 ou 28, dans lequel le client sélectionne un itinéraire optimal parmi lesdits nouveaux itinéraires optimaux respectifs avant que ledit taxi (12) ne fournisse un service de transport associé à ladite nouvelle destination.

30. Procédé selon la revendication 28 ou 29, dans lequel le client paie un prix indiqué par des informations de prix relatives au dit nouvel itinéraire optimal ou au dit itinéraire optimal sélectionné, respectivement, avant que ledit taxi ne fournisse un service de transport associé à ladite nouvelle destination.

31. Procédé selon l'une quelconque des revendications 27 à 30, dans lequel ledit équipement central (16) obtient, en outre, des informations de distance relatives à une distance de ladite nouvelle position actuelle à ladite nouvelle destination, associée auxdits nouveaux itinéraires optimaux respectifs conformément auxdites informations de nouvelle position actuelle et nouvelles informations de destination, et transmet lesdites informations incluant lesdites informations de distance au dit taxi (12).

32. Procédé selon l'une quelconque des revendications 27 à 31, dans lequel ledit équipement central (16) obtient, en outre, des informations de durée de conduite relatives à une durée de conduite requise, associée auxdits nouveaux itinéraires optimaux respectifs conformément auxdites informations de nouvelle position actuelle et nouvelles informations de destination, et transmet lesdites informations incluant lesdites informations de durée de conduite au dit taxi (12).

33. Procédé selon l'une quelconque des revendications 23 à 32, dans lequel lesdits plusieurs éléments différents incluent des prix pour lesdits itinéraires optimaux respectifs, une distance de ladite position actuelle à ladite destination, associée auxdits itinéraires optimaux respectifs, et une durée de conduite requise qui est requise par ledit taxi (12), associée auxdits itinéraires optimaux respectifs.

34. Procédé selon la revendication 23, dans lequel ledit système comprend, en outre, un terminal téléphonique portable (27) qui est monté sur ledit au moins un taxi, ledit équipement central (16) ayant un contrôleur de communication (32), un contrôleur (34), une unité de mémorisation d'informations de carte (33), une unité de mémorisation d'informations de prix pré-fixé (31), et un récepteur d'informations ITS (35), ledit procédé comprenant, en outre, les étapes consistant :
à transmettre à partir dudit terminal téléphonique portable (27) des informations de position actuelle relatives à ladite position actuelle et des informations de destination indiquant une destination spécifiée par un client dudit taxi (12);
à recevoir par ledit contrôleur de communication (32) lesdites informations de position actuelle et informations de destination, et à lire à partir de ladite unité de mémorisation d'informations de carte (33), sous la commande dudit contrôleur (34), des informations de carte correspondant auxdites informations de position actuelle et informations de destination ;
à trouver par ledit contrôleur (34), conformément auxdites informations de carte lues, une pluralité d'itinéraires connectant lesdites position actuelle et destination ;
à recevoir par ledit récepteur d'informations ITS (35) des informations ITS fournies par le système ITS, et à acquérir lesdites informations ITS par ledit contrôleur (34) ;
à calculer par ledit contrôleur (34), conformément auxdites informations ITS acquises, une durée de conduite requise pour chacun desdits plusieurs itinéraires ;
à déterminer par ledit contrôleur (34) un itinéraire optimal parmi lesdits plusieurs itinéraires, qui est un itinéraire de durée la plus courte ayant une durée de conduite requise la plus courte ;
à calculer par ledit contrôleur (34), conformément auxdites informations de carte, une distance entre ladite position actuelle et ladite destination, associée au dit itinéraire de durée la plus courte ;
à lire, à partir de ladite unité de mémorisation d'informations de prix pré-fixé (31), sous la commande dudit contrôleur (34), des informations de prix de service associées à une compagnie de taxis ;
à calculer par ledit contrôleur (34), conformément auxdites informations de prix de service lues, un prix pour ledit itinéraire de durée la plus courte ; et
à générer par ledit contrôleur (34) des informations incluant des informations d'itinéraire de durée la plus courte indicatives dudit itinéraire de durée la plus courte, des informations de distance indicatives de ladite distance, et des informations de prix indicatives dudit prix, et à transmettre lesdites informations, dudit contrôleur de communication (32) au dit taxi (12), en ajoutant des informations d'adresse dudit terminal téléphonique portable (27) auxdites informations générées.

35. Procédé selon la revendication 34, dans lequel ledit client paie un prix indiqué par lesdites informations de prix, avant qu'un service de transport associé à ladite destination ne soit fourni par ledit taxi (12).

36. Procédé selon la revendication 34, comprenant, en outre, si le client change la destination pour une nouvelle destination lorsqu'un service est fourni par ledit taxi (12), les étapes consistant :
à lire, à partir de ladite unité de mémorisation d'informations de carte (33), par ledit contrôleur (34), des nouvelles informations de carte correspondant auxdites informations de nouvelle position actuelle et nouvelles informations de destination ;
à trouver par ledit contrôleur (34), conformément auxdites nouvelles informations de carte, une pluralité de nouveaux itinéraires connectant ladite nouvelle position actuelle et ladite nouvelle destination ;
à recevoir par ledit récepteur d'informations ITS (35) des informations ITS fournies par le système ITS, et à acquérir lesdites informations ITS par ledit contrôleur (34) ;
à calculer par ledit contrôleur (34), conformément auxdites informations ITS acquises, une durée de conduite requise pour chacun desdits plusieurs nouveaux itinéraires ;
à déterminer par ledit contrôleur (34) un itinéraire optimal parmi lesdits plusieurs nouveaux itinéraires, qui est un nouvel itinéraire de durée la plus courte ayant la durée de conduite requise la plus courte ;
à calculer par ledit contrôleur (34), conformément auxdites nouvelles informations de carte, une nouvelle distance entre lesdites nouvelle position actuelle et nouvelle destination, associée au dit nouvel itinéraire de durée la plus courte ;
à calculer par ledit contrôleur (34), conformément auxdites informations de prix de service, un prix pour ledit nouvel itinéraire de durée la plus courte ; et
à générer par ledit contrôleur (34) des informations incluant des informations d'itinéraire de durée la plus courte indicatives dudit nouvel itinéraire de durée la plus courte, des informations de distance indicatives de ladite nouvelle distance, et des informations de prix indicatives dudit nouveau prix, et à transmettre lesdites informations, dudit contrôleur de communication (32) au dit taxi (12), en ajoutant des informations d'adresse dudit terminal téléphonique portable (27) auxdites informations générées.

37. Procédé selon la revendication 36, dans lequel ledit client paie un prix indiqué par lesdites nouvelles informations de prix, avant qu'un service de transport associé à ladite nouvelle destination ne soit fourni par ledit taxi (12).

38. Procédé selon la revendication 23, dans lequel ledit système comprend, en outre, un terminal téléphonique portable (27) qui est monté sur ledit au moins un taxi, ledit équipement central (16) ayant un contrôleur de communication (32), un contrôleur (34), une unité de mémorisation d'informations de carte (33), une unité de mémorisation d'informations de prix pré-fixé (31), et un récepteur d'informations ITS (35), ledit procédé comprenant, en outre, les étapes consistant :
à transmettre à partir dudit terminal téléphonique portable (27) des informations de position actuelle relatives à ladite position actuelle et des informations de destination indiquant une destination spécifiée par un client dudit taxi (12) ;
à recevoir par ledit contrôleur de communication (32) lesdites informations de position actuelle et informations de destination, et à lire à partir de ladite unité de mémorisation d'informations de carte (33), sous la commande dudit contrôleur (34), des informations de carte correspondant auxdites informations de position actuelle et informations de destination ;
à trouver par ledit contrôleur (34), conformément auxdites informations de carte lues, une pluralité d'itinéraires connectant lesdites position actuelle et destination ;
à calculer par ledit contrôleur (34), conformément auxdites informations de carte, une distance de ladite position actuelle à ladite destination pour chacun desdits plusieurs itinéraires ;
à déterminer par ledit contrôleur (34) un des itinéraires optimaux qui est un itinéraire le plus court ayant la distance la plus courte parmi lesdits plusieurs itinéraires ;
à recevoir par ledit récepteur d'informations ITS (35) des informations ITS fournies par le système ITS, et à acquérir lesdites informations ITS par ledit contrôleur ;
à calculer par ledit contrôleur (34), conformément auxdites informations ITS acquises, une durée de conduite requise pour chacun desdits plusieurs itinéraires ;
à déterminer par ledit contrôleur (34) un des itinéraires optimaux qui est un itinéraire de durée la plus courte ayant une durée de conduite requise la plus courte parmi lesdits plusieurs itinéraires ;
à lire, à partir de ladite unité de mémorisation d'informations de prix pré-fixé (31), sous la commande dudit contrôleur (34), des informations de prix de service associées à une compagnie de taxis ;
à calculer par ledit contrôleur (34), conformément auxdites informations de prix de service, un prix pour chacun desdits plusieurs itinéraires ;
à déterminer par ledit contrôleur (34) un des itinéraires optimaux qui est un itinéraire de prix le plus bas ayant un prix le plus bas parmi lesdits plusieurs itinéraires ; et
à générer par ledit contrôleur (34) des informations incluant des informations indiquant ledit itinéraire de distance la plus courte et sa distance, des informations indiquant ledit itinéraire de durée la plus courte et sa durée, et des informations indiquant ledit itinéraire de prix le plus bas et son prix, et à transmettre lesdites informations au dit taxi (12), en ajoutant des informations d'adresse dudit terminal téléphonique portable (27) auxdites informations générées.

39. Procédé selon la revendication 38, incluant, en outre, les étapes consistant à sélectionner par le client un desdits itinéraires optimaux avant qu'un service de transport associé à ladite destination ne soit fourni par ledit taxi (12), et à payer un prix indiqué par lesdites informations de prix relatives au dit itinéraire optimal sélectionné.

40. Procédé selon la revendication 39, comprenant, en outre, si le client change la destination pour une nouvelle destination lorsqu'un service est fourni par ledit taxi (12), les étapes consistant ;
à transmettre par ledit taxi (22), dudit terminal téléphonique portable (27) au dit équipement central (16), des informations de position actuelle à l'instant dudit changement et des informations de destination indiquant ladite nouvelle destination ;
à recevoir par ledit équipement central (16), en utilisant ledit contrôleur de communication (32), lesdites informations de nouvelle position actuelle et lesdites nouvelles informations de destination,
à lire, à partir de ladite unité de mémorisation d'informations de carte (33), par ledit contrôleur (34), des nouvelles informations de carte correspondant auxdites informations de nouvelle position actuelle et nouvelles informations de destination ;
à trouver par ledit contrôleur (34), conformément auxdites nouvelles informations de carte, une pluralité de nouveaux itinéraires connectant ladite nouvelle position actuelle et ladite nouvelle destination ;
à calculer par ledit contrôleur (34), conformément auxdites nouvelles informations de carte, une distance de ladite nouvelle position actuelle à ladite nouvelle destination pour chacun desdits itinéraires optimaux ;
à déterminer par ledit contrôleur (34) un nouvel itinéraire en tant qu'un des itinéraires optimaux qui est un itinéraire le plus court ayant la distance la plus courte parmi lesdits plusieurs itinéraires ;
à acquérir par ledit contrôleur (34) de nouvelles informations ITS en provenance dudit récepteur d'informations ITS (35) ;
à calculer par ledit contrôleur (34), conformément auxdites informations ITS acquises, une durée de conduite requise pour chacun desdits plusieurs itinéraires ;
à déterminer par ledit contrôleur (34) un nouvel itinéraire en tant qu'un des itinéraires optimaux, qui est un itinéraire de durée la plus courte parmi lesdits plusieurs itinéraires ayant la durée de conduite requise la plus courte ;
à calculer par ledit contrôleur (34), conformément auxdites informations de prix de service, un prix pour chacun desdits plusieurs itinéraires ;
à déterminer par ledit contrôleur (34) un nouvel itinéraire en tant qu'un des itinéraires optimaux, qui est un itinéraire de prix le plus bas parmi lesdits plusieurs itinéraires ayant le prix le plus bas ; et
à générer par ledit contrôleur (34) des informations incluant de nouvelles informations d'itinéraire de distance la plus courte indiquant ledit itinéraire de distance la plus courte, de nouvelles informations d'itinéraire de durée la plus courte indiquant ledit nouvel itinéraire de durée la plus courte, et de nouvelles informations d'itinéraire de prix le plus bas indiquant ledit itinéraire de prix le plus bas, et à transmettre lesdites informations au dit taxi (12), en ajoutant des informations d'adresse dudit terminal téléphonique portable (27) auxdites informations générées.

41. Procédé selon la revendication 40, incluant, en outre, les étapes consistant à sélectionner par le client un desdits nouveaux itinéraires optimaux avant qu'un service de transport associé à ladite nouvelle destination ne soit fourni par ledit taxi (12), et à payer un prix indiqué par lesdites informations de prix relatives au dit itinéraire optimal sélectionné.

42. Procédé selon la revendication 38 ou 41, dans lequel, si le client change la destination pour une nouvelle destination lorsqu'un service est fourni par ledit taxi (12), ledit contrôleur (34) calcule un premier prix pour un itinéraire de ladite nouvelle position actuelle à ladite destination conformément auxdites informations de carte, auxdites informations ITS, et auxdites informations de prix de service, calcule un second prix pour un itinéraire de ladite nouvelle position actuelle à ladite nouvelle destination conformément auxdites nouvelles informations de carte, auxdites nouvelles informations ITS, et auxdites informations de prix de service, soustrait ledit second prix dudit premier prix, et ajoute ledit second prix au dit résultat de soustraction afin de calculer ledit nouveau prix.

43. Procédé selon la revendication 42, dans lequel ledit contrôleur (34) calcule un solde entre ledit premier prix et ledit nouveau prix, et transmet au dit taxi (12) des informations relatives au dit solde conjointement avec des informations concernant ledit premier prix, à travers ledit contrôleur de communication (32).

44. Procédé selon la revendication 34, dans lequel ledit taxi (12) reçoit, par ledit terminal téléphonique portable (27), des informations transmises à partir dudit équipement central (16), lit, à partir de ladite unité de mémorisation d'informations de carte (25) dudit terminal GPS (20), sous la commande d'un contrôleur (26) dudit terminal GPS (20), des informations de carte correspondant au dit itinéraire optimal incluses dans lesdites informations reçues, affiche, sur un dispositif d'affichage d'image (24), lesdites informations de carte sur lesquelles ledit itinéraire optimal est superposé, et affiche une distance de ladite position actuelle à ladite destination, associée au dit itinéraire optimal, une durée de conduite requise dudit taxi (12), associée au dit itinéraire optimal, et un prix pour ledit itinéraire optimal, qui sont inclus dans lesdites informations envoyées à partir dudit équipement central (16).

45. Procédé selon la revendication 38, dans lequel ledit taxi (12) reçoit, par ledit terminal téléphonique portable (27), des informations transmises par ledit équipement central (16), lit, à partir de ladite unité de mémorisation d'informations de carte (25) dudit terminal GPS (20), sous la commande d'un contrôleur (26) dudit terminal GPS (20), des informations de carte correspondant au dit itinéraire optimal inclus dans lesdites informations reçues, affiche, sur un dispositif d'affichage d'image (24), lesdites informations de carte sur lesquelles ledit itinéraire optimal est superposé, et affiche une distance de ladite position actuelle à ladite destination, qui est associée auxdits itinéraires optimaux respectifs, une durée de conduite requise dudit taxi (12), qui est associée auxdits itinéraires optimaux respectifs, et des prix pour lesdits itinéraires optimaux respectifs, qui sont inclus dans lesdites informations transmises depuis ledit équipement central (16).

46. Procédé selon la revendication 34, dans lequel, si le client change la destination pour une nouvelle destination lorsqu'un service est fourni par ledit taxi (12), ledit taxi (12) reçoit, par ledit terminal téléphonique portable (27), de nouvelles informations envoyée à partir dudit équipement central (16), lit, à partir de ladite unité de mémorisation d'informations de carte (25) dudit terminal GPS (20), sous la commande d'un contrôleur (26) dudit terminal GPS (20), des nouvelles informations de carte correspondant au dit nouvel itinéraire optimal inclus dans lesdites nouvelles informations reçues en provenance dudit équipement central (16), affiche, sur un dispositif d'affichage d'image (24), lesdites nouvelles informations de carte sur lesquelles ledit nouvel itinéraire optimal est superposé, et affiche une distance de ladite nouvelle position actuelle à ladite nouvelle destination, qui est associée au dit nouvel itinéraire optimal, une durée de conduite requise dudit taxi (12), associée au dit nouvel itinéraire optimal, et un prix pour ledit nouvel itinéraire optimal, qui sont inclus dans lesdites nouvelles informations.

47. Procédé selon la revendication 38, dans lequel, si le client change la destination pour une nouvelle destination lorsqu'un service est fourni par ledit taxi (12), ledit taxi (12) reçoit, par ledit terminal téléphonique portable (27), de nouvelles informations envoyées à partir dudit équipement central (16), lit, à partir de ladite unité de mémorisation d'informations de carte (25) dudit terminal GPS (20), sous la commande d'un contrôleur (26) dudit terminal GPS (20), des nouvelles informations de carte correspondant auxdits nouveaux itinéraires optimaux respectifs incluses dans lesdites nouvelles informations reçues en provenance dudit équipement central (16), affiche, sur un dispositif d'affichage (24), lesdites nouvelles informations de carte sur lesquelles lesdits nouveaux itinéraires optimaux respectifs sont superposés, et affiche une distance de ladite nouvelle position actuelle à ladite nouvelle destination, qui est associée auxdits nouveaux itinéraires optimaux respectifs, une durée de conduite requise dudit taxi (12), qui est associée auxdits nouveaux itinéraires optimaux respectifs, et des prix pour lesdits nouveaux itinéraires optimaux respectifs, inclus dans lesdites nouvelles informations.

48. Procédé selon la revendication 46 ou 47, dans lequel ledit équipement central (16) administre des informations obtenues pour ledit nouvel itinéraire optimal pour chaque taxi (12).

49. Procédé selon la revendication 46, dans lequel, pour chaque taxi (12), ledit équipement central (16) administre lesdites informations obtenues par rapport auxdits itinéraires optimaux respectifs, qui ont été obtenues pour un itinéraire optimal sélectionné parmi lesdits itinéraires optimaux par le client.

50. Procédé selon la revendication 47, dans lequel, pour chaque taxi (12), ledit équipement central (16) administre lesdites informations obtenues par rapport auxdits nouveaux itinéraires optimaux respectifs, qui ont été obtenues pour un itinéraire optimal sélectionné parmi lesdits nouveaux itinéraires optimaux par le client.

51. Procédé selon la revendication 23, comprenant, en outre, les étapes consistant :
à présenter à un client, par un conducteur de taxi, un prix pour un service de transport correspondant à une destination spécifiée par le client lorsque le client embarque dans le taxi (12); et
à payer pour ledit prix par le client avant que ledit service de transport ne soit fourni par le taxi (12).

52. Procédé selon la revendication 51, dans lequel ledit prix est calculé en fonction d'une position actuelle où le client embarque dans le taxi (12) et de ladite destination.

53. Procédé selon la revendication 52, comprenant, en outre, s'il existe un changement de la destination pour une nouvelle destination alors que ledit service de transport est fourni par ledit taxi (12), les étapes consistant :
à calculer un nouveau prix en fonction d'une position actuelle à l'instant dudit changement et de ladite nouvelle destination, ledit nouveau prix étant présenté au client par le conducteur ; et
à payer par le client ledit nouveau prix avant que ledit service de transport associé à ladite nouvelle destination ne soit fourni par le taxi (12).

54. Procédé selon la revendication 53, dans lequel ledit prix est calculé pour un itinéraire optimal entre ladite position actuelle et ladite destination.

55. Procédé selon la revendication 23, comprenant, en outre, les étapes consistant :
à trouver lesdits itinéraires optimaux respectifs entre une destination spécifiée par un client lorsque le client embarque dans le taxi (12) et ladite position actuelle à l'instant dudit changement, pour lesdits différents éléments respectifs ;
à calculer pour lesdits itinéraires optimaux respectifs des prix pour ledit service de transport fourni par le taxi (12) ;
à présenter à un client par un conducteur de taxi chacun desdits prix calculés respectivement pour lesdits itinéraires optimaux ; et
à sélectionner par le client un desdits itinéraires optimaux, et à payer par le client un prix pour ledit itinéraire optimal sélectionné, avant que ledit service de transport ne soit fourni par le taxi (12).

56. Procédé selon la revendication 55, comprenant, en outre, s'il existe un changement de la destination pour une nouvelle destination alors que ledit service de transport est fourni par ledit taxi (12), les étapes consistant :
à trouver de nouveaux itinéraires optimaux entre une nouvelle destination à l'instant dudit changement et ladite nouvelle destination, pour lesdits différents éléments respectifs ;
à calculer de nouveaux prix pour ledit service de transport fourni par le taxi (12), pour chacun desdits nouveaux itinéraires optimaux,
à présenter au client par le conducteur de taxi chacun desdits nouveaux prix calculés pour chacun desdits nouveaux itinéraires optimaux ; et
à sélectionner par le client un desdits nouveaux itinéraires optimaux, et à payer par le client un prix pour ledit itinéraire optimal sélectionné, avant que ledit service de transport associé à ladite nouvelle destination ne soit fourni par le taxi (12).
